(19) Europäisches Patentamt
European Patent Office
Office européen des brevets

(11) Publication number: 0 307 670 B1

(12) # EUROPEAN PATENT SPECIFICATION

(45) Date of publication of patent specification: **21.09.94** (51) Int. Cl.5: **C08L 79/08**, C08G 73/10

(21) Application number: **88113775.6**

(22) Date of filing: **24.08.88**

(54) **Flame resistant polyetherimide-siloxane-polyetherimide copolymer blends.**

(30) Priority: **04.09.87 US 92940**

(43) Date of publication of application:
**22.03.89 Bulletin 89/12**

(45) Publication of the grant of the patent:
**21.09.94 Bulletin 94/38**

(84) Designated Contracting States:
**DE FR GB IT NL**

(56) References cited:
**EP-A- 132 094**
**EP-A- 152 279**
**EP-A- 219 014**
**WO-A-87/00846**
**FR-A- 2 378 056**
**FR-E- 2 236 887**
**US-A- 4 586 997**

(73) Proprietor: **GENERAL ELECTRIC COMPANY**
**1 River Road**
**Schenectady New York 12305 (US)**

(72) Inventor: **Rock, John Andrew**
**P.O. Box No. 1**
**Hinsdale Massachussetts 01223 (US)**
Inventor: **Male, L. Joseph**
**RD 10-RT. 13**
**Old Chatham New York 12136 (US)**
Inventor: **Bookbinder, Dana Craig**
**75 Pomeroy Avenue**
**Pittsfield Massachusetts 01201 (US)**

(74) Representative: **Pratt, Richard Wilson et al**
**London Patent Operation**
**G.E. Technical Services Co. Inc.**
**Essex House**
**12/13 Essex Street**
**London WC2R 3AA (GB)**

EP 0 307 670 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to improved melt processed blends of polyetherimides and siloxane polyetherimide copolymers. These blends are characterized by very low flammabilities. They are particularly suited for the construction of various panels and parts for aircraft interiors.

Because of their light weight, durability and strength, engineering thermoplastics are used for the construction of many components of aircraft interiors. Components such as wall panels, overhead storage lockers, serving trays, seat backs, cabin partitions and the like are conveniently and economically fabricated from thermoplastics by extrusion, thermoforming, injection molding and blow-molding techniques.

Recent attention to the effects of fire and smoke on survivability during aircraft mishaps has led to the promulgation of standards for the flame resistance of construction materials used for the interiors of transport category aircraft. One drawback of engineering thermoplastics conventionally used for the construction of aircraft interior components is their inability to meet the latest flammability performance standards. Such standards are embodied in 1986 amendments to Part 25-Airworthiness Standards-Transport Category Airplanes of Title 14, Code of Federal Regulations. (See 51 Federal Register 26206, July 21. 1986 and 51 Federal Register 28322, August 7, 1986.) The flammability standards are based on heat calorimetry tests developed at Ohio State University. Such tests are described in the above-cited amendments to 14 C.F.R. Part 25.

Various means have been employed for enhancing the flame resistance of engineering thermoplastics. In general, these means involve blending with the thermoplastic an additive or another polymer which reduces the overall flammability of the resin. In EP-A-266 595 and EP-A-346 403, low-flammability blends of polyetherimides and polyetherimide-polycarbonate mixtures with certain siloxane polyetherimide copolymers are disclosed. These blends maintain the good heat-release and smoke-release characteristics of polyetherimides and have improved impact strengths and processing characteristics.

WO-A-87/00846 discloses an extrudable, flame retardant, silicone-polyimide comprising, by weight, 40 to 90% of chemically combined arylimide and 10 to 60% of chemically combined polydiorganopolysiloxane.

EP-A-219 014 discloses flame retardant elastomer materials prepared by admixing a polyetherimide and a halogenated flame retarding material.

A variety of known polymers and additives are characterized by very low flammabilities. However, simply blending such materials with high-performance engineering thermoplastics often does not yield a useable flame-resistant material. For example, the low-flammability material may not be compatible with the engineering thermoplastic at the concentrations required to impart significant flame retardance. E.g., the low-flammability material may not be miscible with the engineering thermoplastic, or it may not be stable at the processing temperatures of the engineering thermoplastic. Even low-flammability materials which are compatible with the engineering thermoplastic often cannot be used effectively to lower the flammability of the thermoplastic. If the effect on flammability is merely additive, as a result of dilution, then to achieve a desired reduction in flammability, so much of the low-flammability material must be added as to adversely affect the physical properties or the processability of the engineering thermoplastic.

Perfluorocarbon polymers, such as polytetrafluoroethylene, fluorinated ethylene propylene, perfluoroalkoxy resin, and the like, are known to have very low flammabilities. Heretofore, perfluorocarbon polymers have been used as drip inhibitors in certain thermoplastics, but it has not been suggested to use these materials to improve heat-release and smoke-release characteristics of thermoplastics. Perfluorocarbon polymers have been blended with polyetherimides for reasons unrelated to the flammability properties. For example, U.S- A - 4,433,104 describes polyetherimide-fluorinated polyolefin blends which have good flexural strength and flexural modulus, and which have higher impact strengths than the unmodified polyetherimide. U.S- A - 4,532,054 discloses polyetherimide bearing compositions that contain a polyetherimide, a fluoropolymer, such as polytetrafluoroethylene, and various lubricants and reinforcing agents. Bearing compositions containing a thermoplastic resin, such as certain polyimides, and a filled polytetrafluoroethylene material are described in U.S- A -3,994,814. The function of the perfluorcarbon polymers in the prior art blends has been to modify the impact strength or to lower the coefficient of friction of the polyetherimides with which they were blended.

Inorganic oxides such as titanium dioxide, antimony oxide, and the like have long been used as pigments and fillers for various thermoplastics including polyetherimides. In addition, antimony pentoxide has been used as a synergist to halogenated organic flame retardants employed in thermoplastic resins. For example, U.S- A - 4,636,544 discloses certain polyester molding compositions which contain halogenated flame-retarding compounds and an antimony oxide synergist. The molding compositions described in US-A-4 636 544 may also contain the thermoplastic resins in addition to polyesters. Such thermoplastic resins include, inter alia, polyetherimides. The compositions also include finely divided titanium dioxide to

inhibit tracking, i.e., electrical discharge or excessive leakage across the surface of molded articles used in electrical applications.

Heretofore, there has been no suggestion to use titanium dioxide to improve the heat-release and smoke-release characteristics of engineering thermoplastics. Prior art uses of titanium dioxides in thermoplastics have generally been as pigments or fillers.

A need continues to exist for high performance engineering thermoplastics which have very low flammabilities and smoke-release characteristics.

The present invention comprises the use for improving heat-release and smoke-release of polyetherimide-siloxane polyetherimide copolymer blends, and of a thermoplastic resin selected from the group consisting of polyetheretherketones, polysulfones and polyethersulfones of, based on the total weight of the polymer blend, 0.2 to 20% by weight of a dispersed perfluorocarbon polymer which is a thermoplastic polyolefin having a melting point in excess of 120 °C.

The present invention also provides a melt-processed polymer blend which comprises a polyetherimide, and based on the polymer blend, 2 to 90% by weight of a siloxane polyetherimide copolymer and 0.2 to 20% by weight of a perfluorocarbon polymer, which is a thermoplastic fluorinated polyolefin having a melting point in excess of 120 °C, wherein the polyetherimide consists of repeating units of the formula

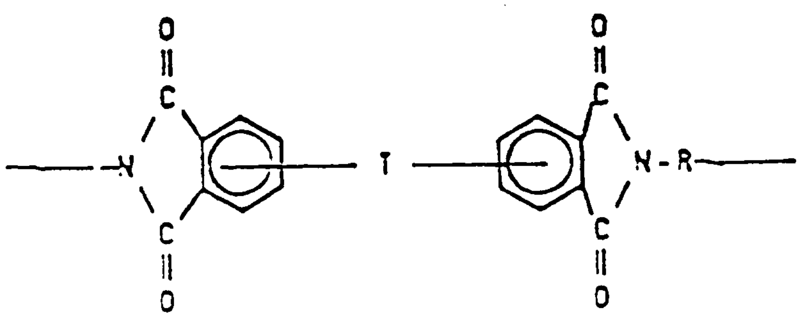

,

and optionally repeating units of the formula

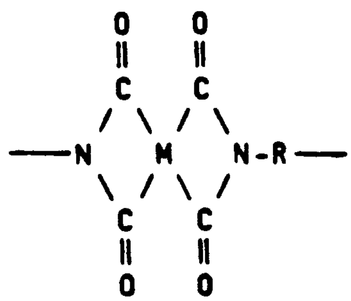

and the siloxane polyetherimide copolymer consists of repeating units of the formula

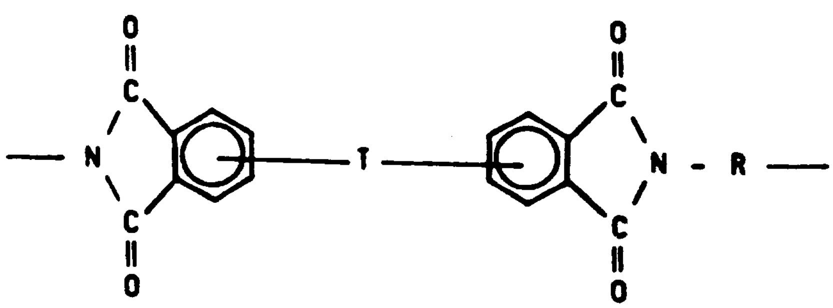

and repeating units of the formula

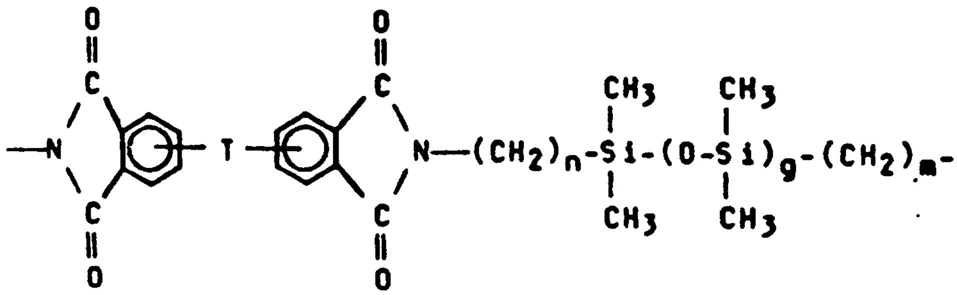

where T is -O- or a group of the formula

-O-Z-O-

wherein the divalent bonds of the -O- or the -O-Z-O-group are in the 3,3', 3,4', 4,3' or 4,4' positions; Z is a member of the class consisting of (A)

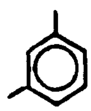 , 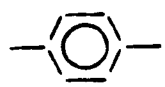 , 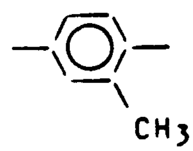 ,

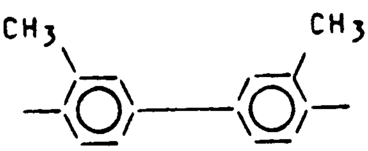 , 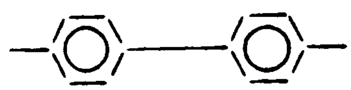

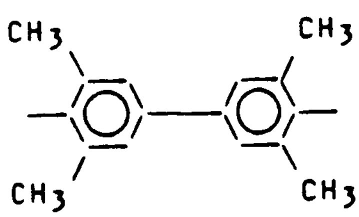 and 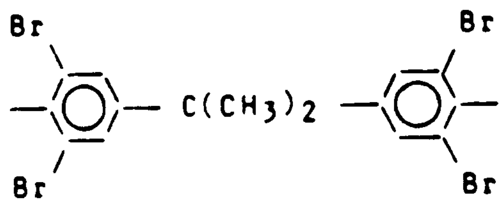

and (B) divalent organic radicals of the general formula

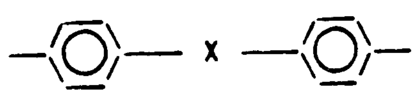

where X is a member selected from the group consisting of divalent radicals of the formulas

$-C_yH_{2y}-$,

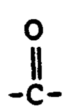 , 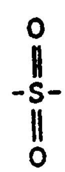 ,

-O- and -S-
where y is an integer from 1 to 5; and R is a divalent organic radical selected from the group consisting of (a) aromatic hydrocarbon radicals having from 6 to 20 carbon atoms and halogenated derivatives thereof, (b) alkylene radicals having from 2 to 20 carbon atoms, cycloalkylene radicals having from 3 to 20 carbon atoms, and (c) divalent radicals of the general formula

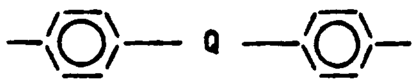

where Q is a member selected from the group consisting of
-S-, -O-,

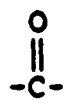 , 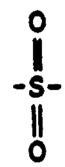 ,

and $-C_xH_{2x-}$,
x is an integer from 1 to 5, n and m independently are integers from 1 10 and g is an integer from 5 to 40, and M is selected from the group consisting of

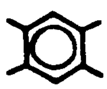 , 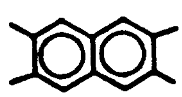 and 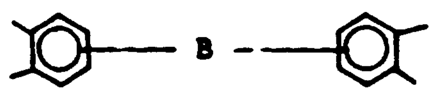

where B is -S- or

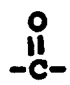 .

The polymer blends of this invention have excellent physical properties and are amenable to conventional melt-processing and thermoforming techniques.

In an alternative embodiment of this invention, dispersing minor amounts of titanium dioxide in polyetherimide-siloxane polyetherimide copolymer blends has been found to improve markedly the heat- and smoke-release characteristics of the polymers. In certain preferred embodiments, both a perfluorocarbon polymer and titanium dioxide are incorporated into the polyetherimide-siloxane polyetherimide copolymer blends. The latter compositions are characterized by remarkedly low flammabilities, yet have excellent physical properties and processabilities.

In addition to improving the flammability characteristics of polyetherimide-siloxane polyetherimide copolymer blends, perflurocarbon polymers have also been found to improve these characteristics for certain other polymers. In particular, incorporating minor amounts of perfluorocarbon polymers into polyetheretherketones, polysulfones and polyethersulfones significantly improves the heat- and smoke-release characteristics of these polymers.

The polyetherimides employed in the blends of this invention are well-known injection moldable engineering thermoplastics. Polyetherimides are characterized by high impact strengths, high temperature resistance and good processability.

The polyetherimides used for preparing the blends of this invention contain repeating groups of the formula

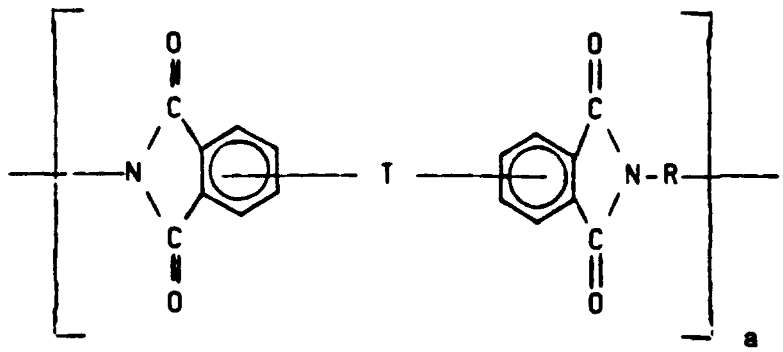

wherein "a" is an integer greater than 1, e.g., from 10 to 10,000 or more; T is -0- or a group of the formula

-O-Z-O-

wherein the divalent bonds of the -O- or the -O-Z-O-group are in the 3,3'; 3,4'; 4,3', or the 4,4' positions; Z is a member of the class consisting of (A):

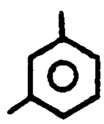 , 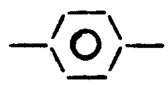 , 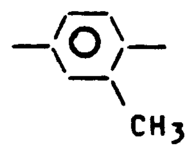 ,

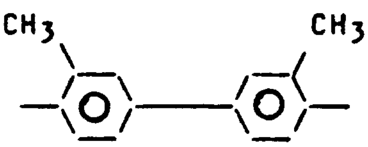 , 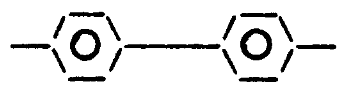

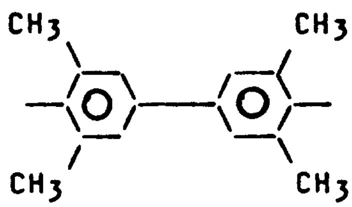 and 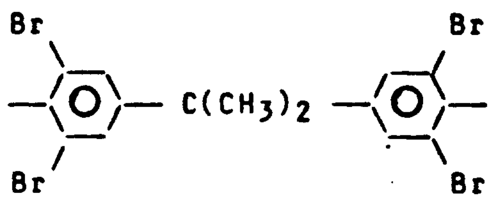

and (B) divalent organic radicals of the general formula

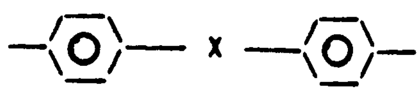

where X is a member selected from the group consisting of divalent radicals of the formulas
$-C_yH_{2y}-$,

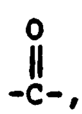, 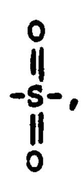,

-O- and -S-

where y is an integer from 1 to about 5; and R is a divalent organic radical selected from the group consisting of (a) aromatic hydrocarbon radicals having from 6 to 20 carbon atoms and halogenated derivatives thereof, (b) alkylene radicals having from 2 to 20 carbon atoms, cycloalkylene radicals having from 3 to 20 carbon atoms, and (c) divalent radicals of the general formula

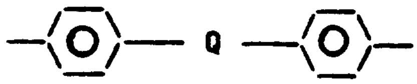

where Q is a member selected from the group consisting of

-S-, -O-,

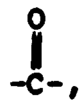 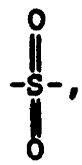

and $-C_xH_{2x}-$,

and x is an integer from 1 to 5.

In one embodiment, the polyetherimide may be a copolymer which, in addition to the etherimide units described above, further contains polyimide repeating units of the formula

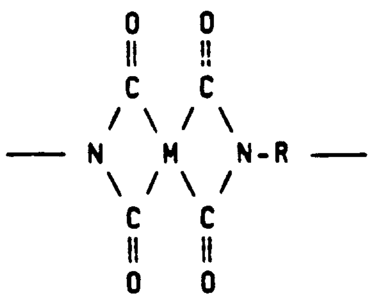

wherein R is as previously defined and M is selected from the group consisting of

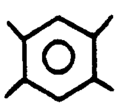 , 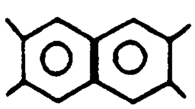 and 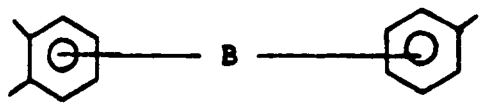

where B is -S- or

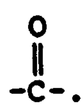

These polyetherimide copolymers and their preparation are described by Williams et al. in U.S- A -3,983,093.

The polyetherimides can be prepared by any of the methods well known to those skilled in the art, including the reaction of an aromatic bis(ether anhydride) of the formula

(I) 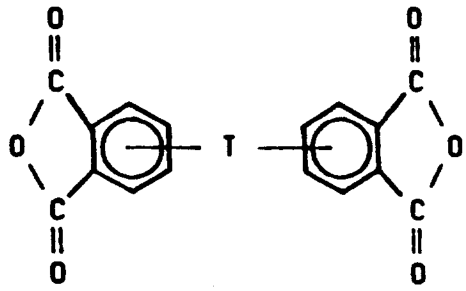

with an organic diamine of the formula

(II) $H_2N\text{-}R\text{-}NH_2$

wherein T and R are defined as described above.

Bis(ether anhydride)s of formula I include, for example,

1,3-bis(2,3-dicarboxyphenoxy)benzene dianhydride;

1,4-bis(2,3-dicarboxyphenoxy)benzene dianhydride;

1,3-bis(3,4-dicarboxyphenoxy)benzene dianhydride; and

1,4-bis(3,4-dicarboxyphenoxy)benzene dianhydride;

4,4'-bis(phthalic anhydride)ether.

A preferred class of aromatic bis(ether anhydride)s included by formula I includes compounds of formula III, IV and V, which follow:

(III) 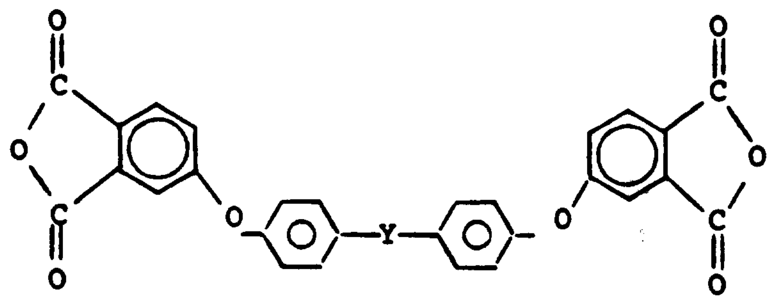

(IV) 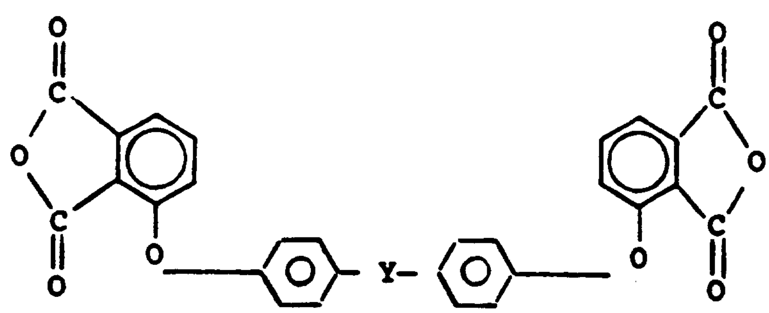

(V) 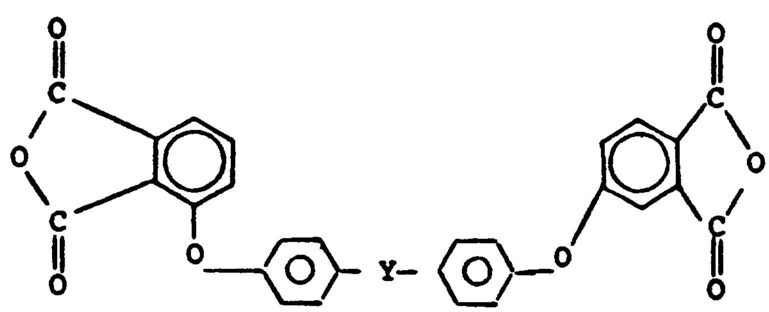

and mixtures thereof where Y is selected from the group consisting of -O-, -S-,

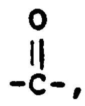, 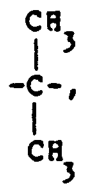, and 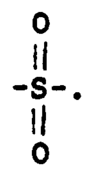.

Aromatic bis(ether anhydride)s of formula III include, for example:
2,2-bis[4-(3,4-dicarboxyphenoxy)phenyl]propane dianhydride;
4,4'-bis(3,4-dicarboxyphenoxy)dipenyl ether dianhydride;
4·4'-bis(3,4-dicarboxyphenoxy)diphenyl sulfide dianhydride;
4,4'-bis(3,4-dicarboxyphenoxy)benzophenone dianhydride;
4·4'-bis(3,4-dicarboxyphenoxy)diphenyl sulfone dianhydride; and mixtures thereof.

Aromatic bis(ether anhydride)s of formula IV include, for example:
2,2-bis([4-(2,3-dicarboxyphenoxy)phenyl]propane dianhydride;
4,4'-bis(2,3-dicarboxyphenoxy)diphenyl ether dianhydride;
4,4'-bis(2,3-dicarboxyphenoxy)diphenyl sulfide dianhydride;
4,4'-bis(2,3-diacarboxyphenoxy)benzophenone dianhydride;
4,4'-bis(2,3-dicarboxyphenoxy)diphenyl sulfone dianhydride; and mixtures thereof.

The aromatic bis(ether anhydride)s of formula V may be, for example,
4-(2,3-dicarboxyphenoxy)-4'-(3,4-dicarboxyphenoxy) diphenyl-2,2-propane dianhydride.
4-(2,3-dicarboxyphenoxy)-4'-(3,4-dicarboxyphenoxy) diphenyl ether dianhydride;
4-(2,3-dicarboxyphenoxy)-4'-(3,4-dicarboxyphenoxy) diphenyl sulfide dianhydride;
4-(2,3-dicarboxyphenoxy)-4'-(3,4-dicarboxyphenoxy) benzophenone dianhydride;
4-(2,3-dicarboxyphenoxy)-4'-(3,4-dicarboxyphenoxy) diphenyl sulfone dianhydride, and mixtures thereof.

When polyetherimide/polyimide copolymers are employed, a dianhydride, such as pyromellitic anhydride, is used in combination with the bis(ether anhydride).

Some of the aromatic bis(ether anhydride)s of formula (I) are shown in U.S-A- 3,972,902. As described therein, the bis(ether anhydride)s can be prepared by the hydrolysis, followed by dehydration, of the reaction product of a nitrosubstituted phenyl dinitrile with a metal salt of dihydric phenol compound in the presence of a dipolar, aprotic solvent.

Additional aromatic bis(ether anhydride)s also included by formula (I) above are shown by Koton, M.M., Florinski, F.S., Bessonov, M.I. and Rudakov, A.P. (Institute of Heteroorganic Compounds, Academy of Sciences, U.S.S.R), U.S.S.R. patent 257,010, November 11, 1969, Appl. May 3, 1967, and by M.M. Koton, F.S. Florinski, Zh. Org. Khin. 4(5), 774 (1968).

The organic diamines of formula (II) include, for example:
m-phenylenediamine,
p-phenylenediamine,
4,4'-diaminodiphenylpropane,
4,4'-diaminodiphenylmethane (commonly named 4,4'-methylenedianiline),
4,4'-diaminodiphenyl sulfide,
4,4'-diaminodiphenyl sulfone,
4,4'-diaminodiphenyl ether (commonly named 4,4'-oxydianiline),
1,5-diaminonaphthalene,
3,3-diamethylbenzidine,
3,3-dimethoxybenzidine,
2,4-bis(beta-amino-t-butyl)toluene,
bis(p-beta-amino-t-butylphenyl)ether,
bis(p-beta-methyl-o-aminophenyl)benzene,
1,3-diamino-4-isopropylbenzene,
1,2-bis(3-aminopropoxy)ethane,
benzidine,
m-xylylenediamine,
2,4-diaminotoluene,
2,6-diaminotoluene,

bis(4-aminocyclohexyl)methane,
3-methylheptamethylenediamine,
4,4-dimethylheptamethylenediamine,
2,11-dodecanediamine,
2,2-dimethylpropylenediamine,
octamethylenediamine,
3-methoxyhexamethylenediamine,
2,5-dimethylhexamethylenediamine,
2,5-dimethylheptamethylenediamine,
3-methylheptamethylenediamine,
5-methylnonamethylenediamine,
1,4-cyclohexanediamine,
1,12-octadecanediamine,
bis(3-aminopropyl)sulfide,
N-methyl-bis(3-aminopropyl)amine,
hexamethylenediamine,
heptamethylenediamine,
nonamethylenediamine,
decamethylenediamine, and mixtures of such diamines.

Preferred polyetherimides are available commercially from General Electric Company, Pittsfield, Massachusetts U.S.A. under the registered trademark, ULTEM.

The blends of this invention further contain a siloxane polyetherimide copolymer. As described in EP-A-266 595, referenced above, polyetherimide-siloxane polyetherimide copolymer blends already have low flammabilities and excellent physical properties. In accordance with the present invention, it has been found that, by incorporating into such blends a perfluorocarbon polymer, titanium dioxide or mixtures thereof, the flammability can be substantially reduced even further.

The siloxane polyetherimide copolymers employed in the blends of this invention may be prepared in a manner similar to that used for polyetherimides, except that a portion or all of the organic diamine reactant is replaced by an amine-terminated organosiloxane of the formula

(VI) 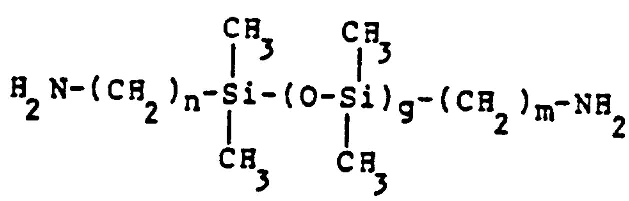

wherein n and m independently are integers from 1 to 10, preferably from 1 to 5, and g is an integer from 5 to 40, preferably from 5 to 25.

The organic diamine of formula II and the amine-terminated organosiloxane of formula VI may be physically mixed prior to reaction with the bis(ether anhydride)(s), thus forming a substantially random copolymer. Alternatively, block or alternating copolymers may be used.

Preferred amine-terminated organosiloxanes are those of the formula VI, in which n and m are each 3, and which have a molecular weight distribution such that g has an average value ranging from 9 to 20.

The diamine component of the siloxane polyetherimide copolymers generally contains from about 20 to 50 mole % of the amine-terminated organosiloxane of formula VI and from 50 to 80 mole % of the organic diamine of formula II. In preferred copolymers, the diamine component contains from 25 to 40 mole %, most preferably about 30 mole % of the amine-terminated organosiloxane.

Both the polyetherimides and the siloxane polyetherimide copolymers used in the blends of this invention may be prepared by any of the procedures conventionally used for preparing polyetherimides. A presently preferred method of preparation is described in U.S- A - 4,417,044.

Blending a siloxane polyetherimide copolymer with a polyetherimide has been found to enhance various important physical properties of the polyetherimide. In particular, the impact strength of the blend is considerably better than that of the unmodified polyetherimide. In addition, the blend is easily fabricated into useful parts by sheet extrusion, thermoforming, injection molding and blow molding. Blow molding can be an efficient and economical procedure for mass production of certain types of components. The heat distortion temperatures (HDT) of the blends of this invention are unexpectedly high, especially in view of the

rather low HDT's of unblended siloxane polyetherimide copolymers. Further advantages of polyetherimide/siloxane polyetherimide copolymer blends are their greater resistance to crack propagation and enhanced retention of impact resistance after heat aging as compared to corresponding unmodified polyetherimides. The latter property can be important in applications requiring thermoforming.

The siloxane polyetherimide copolymer is employed in the present blends in impact strength-enhancing concentrations. Such concentations can vary over a fairly wide range, for example, from 2% to 90% by wt. of the blends, preferably, from 2% to 75% by wt. of the blends, most preferably from 5% to 30% by wt. of the blends.

The perfluorocarbon polymers employed in the blends of this invention are thermoplastic fluorinated polyolefins which have an essentially crystalline structure and have a melting point in excess of about 120 °C. They are preferably a polymer of one or more perfluorinated monomers containing ethylenic unsaturation and optionally one or more other compounds containing ethylenic unsaturation. Suitable monomers include, for example, perfluorinated monoolefins, such as hexafluoropropylene or tetrafluoroethylene, and perfluoroalkyl vinyl ethers in which the alkyl group contains up to six carbon atoms, e.g., perfluoro (methyl vinyl ether). The monoolefin is preferably a straight or branched chain compound having a terminal ethylenic double bond and containing less than six carbon atoms, especially two or three carbon atoms. When units derived from monomers other than fluorine-containing monomers are present, the amount thereof is preferably less than 30 mole %, generally less than 15 mole %. Such other monomers include, for example, olefins containing less than six carbon atoms and having a terminal ethylenic double bond, especially ethylene and propylene. The perfluorocarbon polymers also include those in which a portion of the fluorine atoms have been replaced by other halogen atoms, such as chlorine or bromine. Preferred perfluorocarbon polymers include polytetrafluoroethylene, polychlorotrifluoroethylene, polybromotriflurooethylene, and copolymers thereof. A particularly preferred fluorinated polyethylene is polytetrafluoroethylene. Other suitable fluorinated polyolefins include polyperfluoropropane, polyperfluorobutadiene, polyhexafluoropropylene, fluorinated ethylene propylene copolymer, and perfluoroalkoxy resin.

More specifically, polytetrafluoroethylenes are fully fluorinated polyethylenes of the basic chemical formula $(-CF_2-CF_2-)_n$ which contains about 76% by weight fluorine.

Relatively low molecular weight perfluorocarbon polymers are preferred for the practice of this invention. In general, the molecular weight of preferred perfluorocarbon polymers generally are less than 500,000. Particularly preferred polytetrafluoroethylenes have molecular weights of less than 100,000. The optimal molecular weight may vary from one perfluorocarbon polymer to another, and can be determined empirically.

The perfluorocarbon polymers are employed in particulate form. Preferably, these polymers are in the form of finely divided solids. The perfluorocarbon polymers may be polymerized to a high molecular weight and then broken down to a desired lower molecular weight and particle size by irradiation. Preferred perfluorocarbon polymers are polymerized in freon to a desired molecular weight using a chain stopper. Examples of perfluorocarbon polymers prepared by the latter procedure are Vydax® AR and Vydax® 1000 which are available from E.I. du Pont de Nemours Co., Inc., Wilmington, Delaware, U.S.A. An example of a perfluorocarbon polymer prepared by the irradiation procedure is Polymist® F5A available from Ausimont, Morristown, New Jersey U.S.A.

The perfluorocarbon polymers employed in this invention advantageously are highly dispersible in the thermoplastic matrix. Uniform dispersion of the perfluorocarbon polymer throughout the matrix results in especially low flammability products. Dispersibility is related to the molecular weight and/or particle size of the perfluorocarbon polymer. The uniformity of the dispersion of the perfluorocarbon polymer can be determined by observing the physical appearance of the molded product or test specimen and by measuring the degree of elongation at break of the product. Low elongation values are indicative of poorly dispersed products.

The perfluorocarbon polymer is employed in a flammability-retarding amount. In general, such amount is effective in substantially lowering the heat-release and smoke-release characteristics as determined by the procedures described in Part 25 of Title 14 of the Code of Federal Regulations referred to above. Typically. the concentration of the perfluorocarbon polymer ranges from 0.2% by wt. to 20% by wt. of the polymer blend. Higher concentrations of the perfluorocarbon can adversely affect the physical properties of the polymer. In addition, to minimize the possibility of hazardous gases being evolved during a fire, the concentration of halogen-containing materials in the present blends is advantageiously kept at a minimum. Preferred blends contain from 0.5% by wt. to 5% by wt. of the perfluorocarbon polymer.

An alternative embodiment of this invention is directed to compositions of a polyetherimide-siloxane polyetherimide copolymer blend which contains a flammability-retarding effective amount of finely divided

titanium dioxide. Surprisingly it has been discovered that minor amounts of titanium dioxide have a substantial effect on the heat-release and smoke-release chracteristics of polyetherimide-siloxane polyetherimide copolymer blends. This result is much greater than would be expected form a simple additive or dilution effect.

The titanium dioxide used in these blends is available in finely divided form from numerous suppliers. The particle size of the titanium dioxide may vary substantially, provided that uniform dispersion of the titanium dioxide throughout the polymer matrix is achieved. Higher particle sizes (e.g., in excess of 5 micrometers), can deleteriously affect the physical properties of the polymer; therefore, lower particle sizes are preferred. Any of the available crystalline forms of the titanium dioxide may be used. The rutile form is usually preferred because of its superior properties as a pigment.

The titanium dioxide is melt blended with the polyetherimide-siloxane polyethermide copolymer blend in a flammability-retarding amount. Such amount is sufficient to substantially lower the heat-release and smoke-release characteristics of the polymer, as determined by the procedures described in Part 25 of Title 14 of the Code of Federal Regulations referred to above. The compositions are prepared by melt blending from 0.5% to 30% by wt., preferably from 2% to 20% by wt. of the titanium dioxide with the polymer, based on the total weight of the resulting composition.

Commercially available titanium dioxide often is silane coated to chemically seal the oxide and to improve adhesion of the particles to the polymer matrix. Such coated oxides may be employed in the present process, but preferably not in amounts greater than 5% by wt. of the total composition. Higher amounts often have a deleterious effect on the appearance of molded articles.

Melt blending the titanium dioxide with the polymer blend is accomplished by known procedures, such as heating the polymer to a temperature above its glass-transition temperature and mixing or extruding it with the titaniuim dioxide. This melt blending may be performed as an independent step or may be an integral part of an extrusion or injection molding operation.

The polymer compositions of the present invention are characterized by very low flammabilities. Without being bound by a particular theory of operation, it is believed that the titanium dioxide interacts the siloxane to provide an inorganic network which inhibits movement of the molten polymer and its attendant fueling of the combustion.

Particularly preferred embodiments of the invention are polyetherimide-siloxane polyetherimide copolymer blends which contain effective amounts of both a perfluorocarbon polymer and titanium dioxide. These additives appear to exhibit a synergistic effect which results in compositions having remarkably low heat-release and smoke-release values.

In addition to the polymeric ingredients and the titanium dioxide, the blends may contain other materials such as fillers, additives, reinforcing agents, and pigments. The compositions of this invention exceed the flammability standards of Part 25 of Title 14 of the Code of Federal Regulations. Moreover, in laboratory tests at 1.5875mm (1/16") thickness, they were found to satisfy UL 94 V-O requirements for flammability, as established by Underwriters Laboratories' "Flammability of Plastic Materials Bulletin" of January 24, 1980.

Various blends have been prepared in accordance with this invention and tested for flame resistance. The results of these tests are shown in the following examples, which are provided for illustration only and are not intended to be limiting.

Examples 1-41

Polymer blends described in Table I below were prepared by a conventional melt-blending procedure using a laboratory extruder. The blends were extruded into small diameter strands, which were chopped into pellets for further molding into test parts. The blends were molded into test plaques by compression molding, blow molding, sheet extrusion or injection molding as indicated in Table I.

The polyetherimide resins employed in these experiments are commercially available resins, sold by General Electric Company, under the trademark, ULTEM®. The polyetherimide identified in Table I as Type A is a homopolymer prepared by reacting 2,2-bis[4-(3,4-dicarboxyphenoxy)phenyl] propane dianhydride ("BPA-DA") and m-phenylenediamine. The polyetherimide identified as Type B is a lower molecular weight form of Type A. The polyetherimide identified as Type C is a copolymer prepared by reacting BPA-DA with a 50/50 mixture of m-phenylenediamine and p-phenylenediamine.

The siloxane polyetherimide copolymer is the reaction product of a mixture of m-phenylenediamine and an amine-terminated organosiloxane, with BPA-DA. The siloxane polyetherimide copolymer designated in Table I as type A is a block copolymer prepared from BPA-DA and a mixture of 60-65 mole % m-phenylenediamine and 35-40 mole % of an amine-terminated organosiloxane of formula VI wherein n and m are 3 and g has an average value of 9-10. The siloxane polyetherimide copolymer designated type B is the

same as type A, except that it is a random copolymer.

The perfluorocarbon polymer designated Type A in Table I was obtained from Ausimont, Morristown, New Jersey under the trademark Polymist F5A. The perfluorocarbons designated Types B, C and D were obtained from E.I. du Pont de Nemours Co., Inc. under the trademarks Vydex AR, Vydex 1000 and DLX 6000 respectively.

The titanium oxide used was a commercially available pigment grade material.

Table I

| Example No. | Polyetherimide Type | Polyetherimide conc wt. % | Siloxane Polyetherimide Type | Siloxane Polyetherimide conc. wt. % | Perfluoro carbon polymer type | Perfluorocarbon polymer conc. wt. % | Titanium Dioxide Conc. wt. % | Flammability[1] 2 min. total heat release | Flammability[1] Max. heat release rate |
|---|---|---|---|---|---|---|---|---|---|
| 1(BU253)[2] | A | 100 | - | - | - | - | - | 43 | 71 |
| 2(BU254)[2] | B | 100 | - | - | - | - | - | 38 | 65 |
| 3(CU081)[3] | A | 100 | - | - | - | - | - | 37 | 52 |
| 4(CU398)[4] | A | 100 | - | - | - | - | - | 49 | 57 |
| | | | | | Average values for Examples 1-4 | | | 42 | 61 |
| 5(BU545)[5] | A | 70 | A | 30 | - | - | - | 21 | 85 |
| 6(BU961)[5] | A | 70 | A | 30 | - | - | - | 19 | 81 |
| 7(CU196)[5] | A | 70 | A | 30 | - | - | - | 22 | 59 |
| 8(CU196)[3] | A | 70 | A | 30 | - | - | - | 58 | 82 |
| | | | | | Average values for Examples 5-8 | | | 30 | 77 |
| 9(CU254)[3] | A | 69 | A | 30 | A | 1 | - | 30 | 58 |
| 10(CU255)[3] | A | 67 | A | 30 | A | 3 | - | 25 | 54 |
| 11(CU355)[4] | A | 67 | A | 30 | A | 3 | - | 37 | 66 |
| 12(BU972)[4] | A | 65 | B | 30 | A | 5 | - | 41 | 78 |
| 13(CU256)[3] | A | 65 | A | 30 | A | 5 | - | 23 | 59 |
| 14(CU277) | A | 69 | A | 30 | B | 1 | - | 28 | 58 |
| 15(CU302)[4,6] | A | 69 | A | 30 | B | 1 | - | 45 | 57 |
| 16(CU302)[3] | A | 69 | A | 30 | B | 1 | - | 34 | 59 |
| 17(CU317)[4] | A | 69 | A | 30 | B | 1 | - | 35 | 56 |
| 18(CU317)[3] | A | 69 | A | 30 | B | 1 | - | 38 | 64 |
| 19(CU317)[2] | A | 69 | A | 30 | B | 1 | - | 33 | 67 |
| | | | | | Average values for Examples 14-19 | | | 36 | 60 |

| Example No. | Polyether-imide Type | Polyether-imide conc wt. % | Siloxane Polyether-imide Type | Siloxane Polyether-imide conc. wt. % | Perfluoro carbon polymer type | Perfluoro-carbon polymer conc. wt. % | Titanium Dioxide Conc. wt. % | Flammability[1] 2 min. total heat release | Max. heat release rate |
|---|---|---|---|---|---|---|---|---|---|
| 20(CU278)[3] | A | 67 | A | 30 | B | 3 | - | 30 | 56 |
| 21(CU275)[3] | A | 69 | A | 30 | C | 1 | - | 31 | 55 |
| 22(CU276)[3] | A | 67 | A | 30 | C | 3 | - | 29 | 53 |
| 23(CU382)[3] | A | 69 | A | 30 | D | 1 | - | 45 | 66 |
| 24(CU383)[3] | A | 67 | A | 30 | D | 3 | - | 48 | 75 |
| * 25(CU063)[3] | C | 100 | - | - | - | - | - | 41 | 58 |
| * 26(CU327)[2] | C | 100 | - | - | - | - | - | 28 | 61 |
| * 27(CU396)[3] | C | 97 | - | - | B | 1 | 2 | 24 | 52 |
| * 28(CU397)[3] | C | 95 | - | - | B | 3 | 2 | 20 | 39 |
| * 29(CU418)[2] | C | 95 | - | - | B | 3 | 2 | -5 | 28 |
| 30(CU417)[2] | C | 85 | A | 10 | B | 3 | 1 | -4 | 24 |
| 31(CU354)[4] | A | 66.9 | A | 24 | A | 2.5 | 6.6 | 9 | 39 |
| 32(CU354)[3] | A | 66.9 | A | 24 | A | 2.5 | 6.6 | 20 | 37 |
| 33(CU395)[3] | A | 59 | A | 30 | B | 3 | 8 | 28 | 50 |
| 34(CU416)[2] | A | 59 | A | 30 | B | 3 | 8 | 15 | 31 |
| 35(CU433)[4] | A | 61 | A | 30 | B | 1 | 8 | 22 | 36 |
| 36(CU434)[4] | A | 59 | A | 30 | B | 3 | 8 | 16 | 44 |
| 37(CU435)[4] | A | 59 | A | 30 | A | 3 | 8 | 22 | 37 |
| 38(BU962)[5] | A | 60.5 | B | 33 | - | - | 6.5 | 6 | 42 |
| 39(CU282)[3] | A | 62 | A | 30 | - | - | 8 | 38 | 49 |
| 40(CU282)[4] | A | 62 | A | 30 | - | - | 8 | 49 | 57 |
| 41(CU282)[2] | A | 62 | A | 30 | - | - | 8 | 15 | 51 |
| 42(CU353)[3] | A | 62 | A | 30 | - | - | 8 | 23 | 43 |
| 43(CU353)[4] | A | 62 | A | 30 | - | - | 8 | 30 | 57 |
| Average Values for Examples 38-43 | | | | | | | | 22 | 48 |

[1]Tests performed at Ohio State University according to procedures described in 14 C.F.R. Part 25.
[2]Sample prepared by injection molding
[3]Sample prepared by compression molding.
[4]Sample prepared by extrusion.
[5]Sample prepared by blow molding.
[6]When Example 15 (CU302) was first tested, the results were 47 and 88. It was resubmitted because it was believed that the sample was inadvertently switched with another sample.

* Comparative examples

Examples 42-47

Blends of perfluorocarbon polymers with various other thermoplastics were prepared and tested for heat-release and smoke release characteristics. The blends and test plaques were prepared as described in

the previous examples. The results are shown in Table II. The perfluorocarbon polymers used in these examples was Polymist®F5A, obtained from Ausimont, Morristown, New Jersey.

The results demonstrate the effectiveness of perfluorocarbon polymers in improving the heat and smoke-release characteristics of the engineering thermoplastics tested.

Table II

| Example No. | Polymer Type | Polymer conc. wt. % | Perfluoro carbon conc. wt. % | Flammability[1] 2 min. total heat release | Max. heat release rate | 2 min. total smoke release | Max. smoke release rate |
|---|---|---|---|---|---|---|---|
| * 42(BU938) | Polyetherether-ketone | 100 | - | 13.1 | 84.8 | 34.8 | 189 |
| 43(CU021) | Polyetherether-ketone | 90 | 10 | <0.06 | 40.4 | 2.2 | 119 |
| * 44(CU057) | Polysulfone | 100 | - | 94 | 115 | 229 | 310 |
| 45(CU019) | Polysulfone | 90 | 10 | 50.1 | 63.8 | 121 | 167 |
| * 46(CU058) | Polyethersulfone | 100 | - | 45.6 | 61 | 111 | 159 |
| 47(CU020) | Polyethersulfone | 90 | 10 | 35.3 | 56 | 70 | 127 |

* Comparative examples

## Claims

1. A melt-processed polymer blend which comprises a polyetherimide, and based on the polymer blend, 2 to 90% by weight of a siloxane polyertherimide copolymer and 0.2 to 20% by weight of a perfluorocarbon polymer which is a thermoplastic fluorinated polyolefin having a melting point in excess of 120° C, wherein the polyetherimide consists of repeating units of the formula

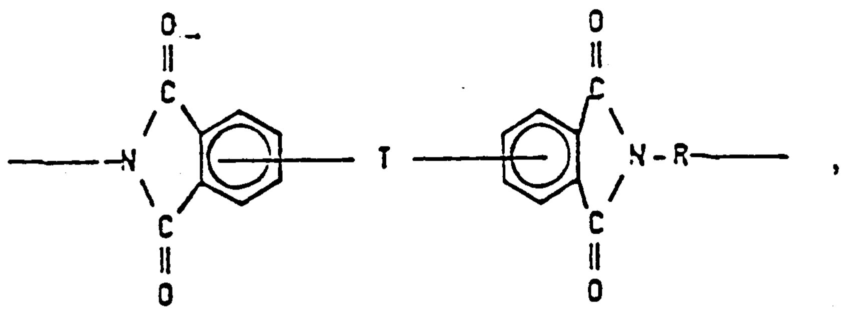

and optionally repeating units of the formula

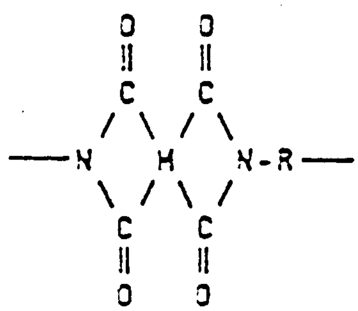

and the siloxane polyetherimide copolymer consists of repeating units of the formula

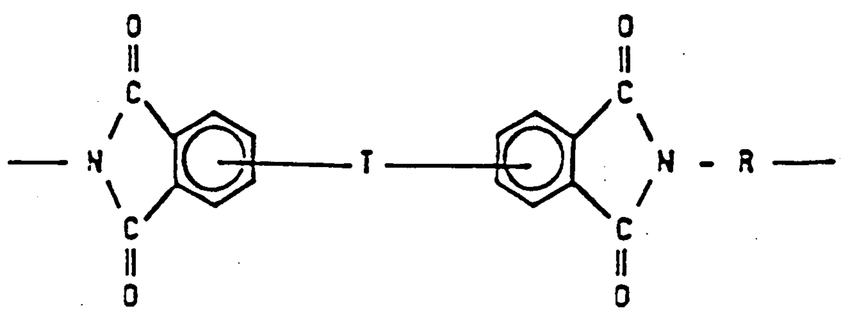

and repeating units of the formula

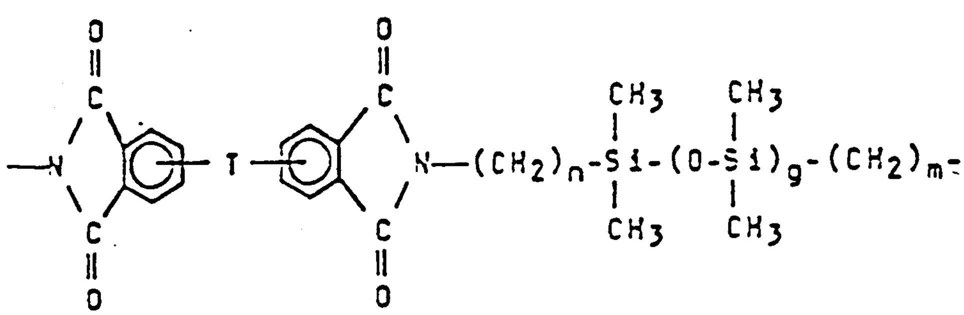

where T is -O- or a group of the formula

-O-Z-O-

wherein the divalent bonds of the -O- or the -O-Z-O-group are in the 3,3', 3,4', 4,3' or 4,4' positions; Z is a member of the class consisting of (A)

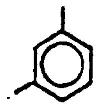 , 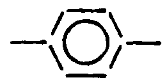 , 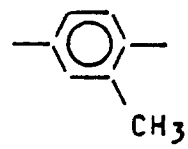 ,

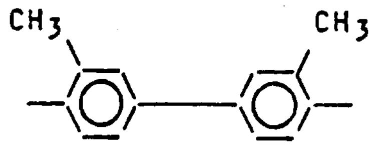 , 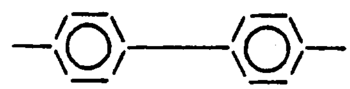

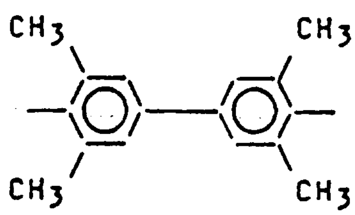 and 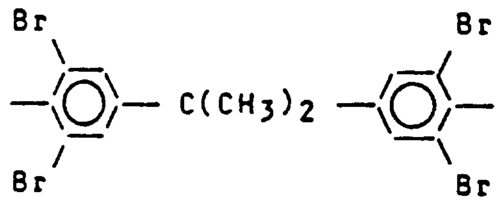

and (B) divalent organic radicals of the general formula

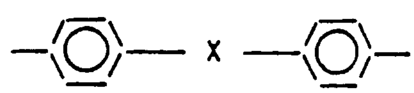

where X is a member selected from the group consisting of divalent radicals of the formulas
$-C_yH_{2y}-$,

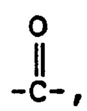 , 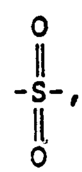 ,

-O- and -S-
where y is an integer from 1 to 5; and R is a divalent organic radical selected from the group consisting of (a) aromatic hydrocarbon radicals having from 6 to 20 carbon atoms and halogenated derivatives thereof, (b) alkylene radicals having from 2 to 20 carbon atoms, cycloalkylene radicals having from 3 to 20 carbon atoms, and (c) divalent radicals of the general formula

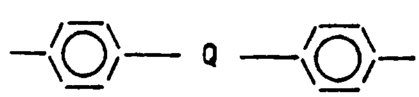

where Q is a member selected from the group consisting of
-S-, -O-,

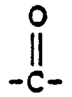, 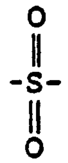,

and $-C_xH_{2x-}$,

x is an integer from 1 to 5, n and m independently are integers from 1 10 and g is an integer from 5 to 40, and M is selected from the group consisting of

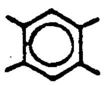, 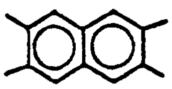 and 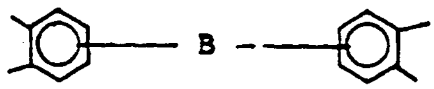

where B is -S- or

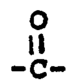.

2. The polymer blend of claim 1, wherein the perfluorocarbon polymer is selected from the group consisting of polytetrafluoroethylene, fluorinated ethylene propylene copolymer, perfluoroalkoxy resin, polychlorotrifluroethylene and polybromotrifluroethylene.

3. The polymer blend of claim 1, wherein the perfluorocarbon polymer has a molecular weight less than 500,000.

4. The polymer blend of claim 2, wherein the perfluorocarbon polymer is polytetrafluoroethylene and has a molecular weight less than 100,000.

5. The polymer blend of claim 3, which contains from 0.5 wt. % to 5 wt. % of the polytetrafluoroethylene.

6. The polymer blend of claim 1, wherein n and m are integers from 1 to 5, and g is an integer from 5 to 25.

7. The polymer blend of claim 6, wherein g has an average value from 9 to 20.

8. The polymer blend of claim 6 wherein the siloxane polyetherimide copolymer is a substantially random copolymer.

9. The polymer blend of claim 6 wherein the siloxane polyetherimide copolymer is a block copolymer.

10. The polymer blend of claim 6 wherein the siloxane polyetherimide copolymer is an alternating copolymer.

11. The polymer blend of claim 1, wherein the organosiloxane-containing repeating unit constitutes from 20 to 50 mole % of the siloxane polyetherimide copolymer.

12. The polymer blend of claim 1, wherein the organosiloxane-containing repeating unit constitutes from 25 to 40 mole % of the siloxane polyetherimide copolymer.

13. The polymer blend of claim 1 which contains from 2% to 75% by wt. of the siloxane polyetherimide copolymer.

**14.** The polymer blend of claim 6 which contains from 5% to 30% by wt. of the siloxane polyetherimide copolymer.

**15.** The polymer blend of claim14 , wherein the polyetherimide consists of repeating units of the formula

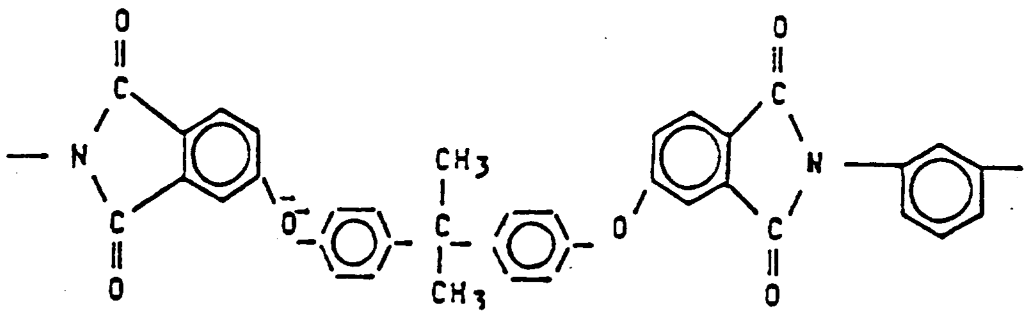

**16.** The polymer blend of claim 1, which contains from 0.5% by wt. to 30% by wt. of finely divided titanium dioxide, based on the total weight of the polymer blend.

**17.** The polymer blend of claim 1, which contains from 2% by wt. to 20% by wt. of finely divided titanium dioxide, based on the total weight of the polymer blend.

**18.** The polymer blend of claim 17, wherein the titanium dioxide has an average particle size less than 5 micrometers.

**19.** A melt-processed polymer blend which comprises a polyetherimide, and based on the total weight of the polymer blend, 2 to 90% by weight of a siloxane polyetherimide copolymer and 0.5 to 30% by weight of finely divided titanium dioxide, wherein the polyetherimide consists of repeating units of the formula

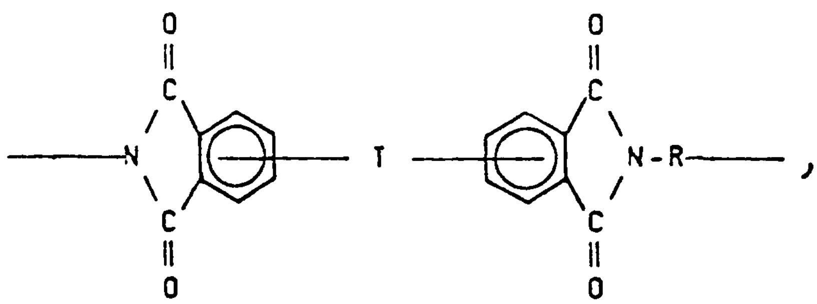

and optionally repeating units of the formula

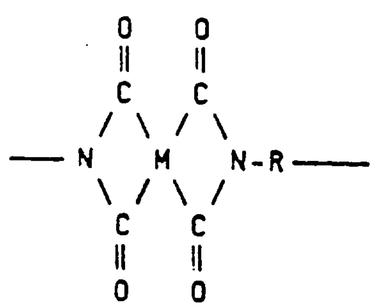

and the siloxane polyetherimide copolymer consists essentially of repeating units of the formula

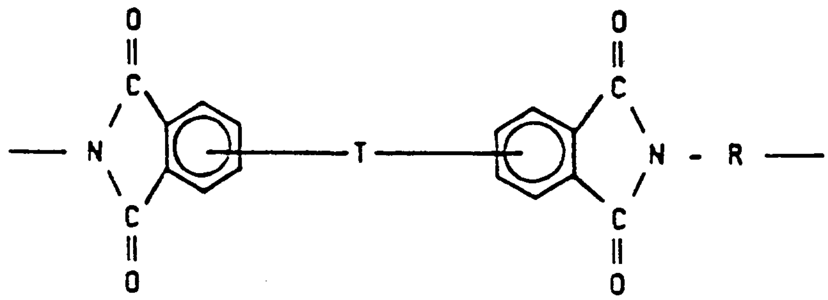

and repeating units of the formula

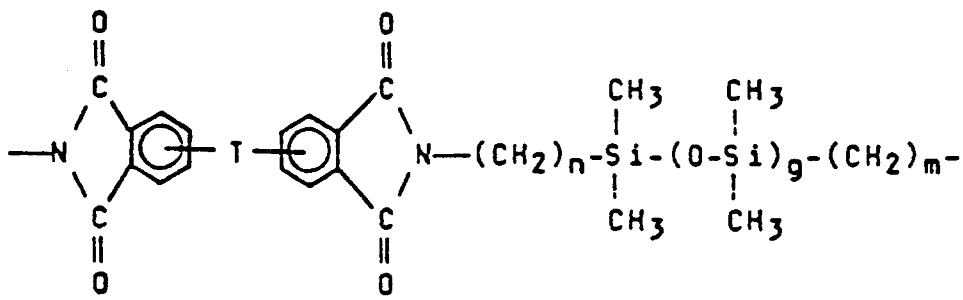

where T is -O- or a group of the formula

-O-Z-O-

wherein the divalent bonds of the -O- or the -O-Z-O-group are in the 3,3', 3,4', 4,3' or 4,4' positions; Z is a member of the class consisting of (A)

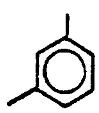

,

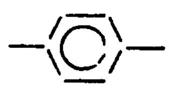

,

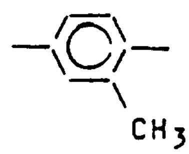

,

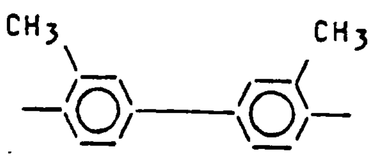

,

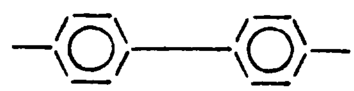

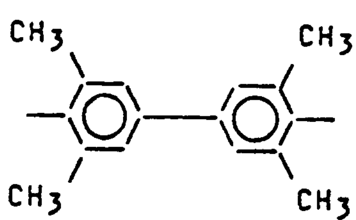

and

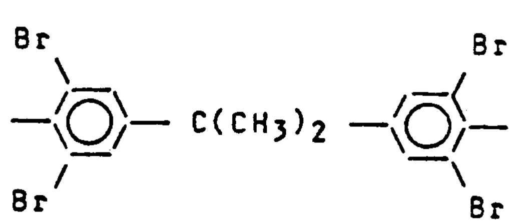

and (B) divalent organic radicals of the general formula

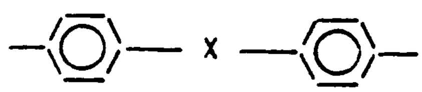

where X is a member selected from the group consisting of divalent radicals of the formulas

$-C_yH_{2y}-$,

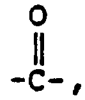, 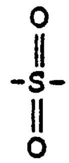,

-O- and -S-

where y is an integer from 1 to 5; and R is a divalent organic radical selected from the group consisting of (a) aromatic hydrocarbon radicals having from 6 to 20 carbon atoms and halogenated derivatives thereof, (b) alkylene radicals having from 2 to 20 carbon atoms, cycloalkylene radicals having from 3 to 20 carbon atoms, and (c) divalent radicals of the general formula

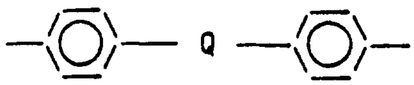

where Q is a member selected from the group consisting of

-S-, -O-,

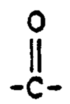, 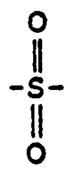,

and $-C_xH_{2x-}$,

x is an integer from 1 to 5, n and m independently are integers from 1 to 10 and g is an integer from 5 to 40, and M is selected from the group consisting of

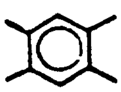, 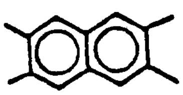 and 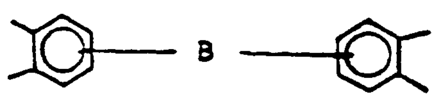

where B is -S- or

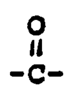.

**20.** The polymer blend of claim 19, which contains from 2 by wt. to 20 % by wt. of the titanium dioxide.

**21.** The polymer blend of claim 20, wherein the titanium dioxide has an average particle size less than 5 micrometers.

**22.** The polymer blend of claim 19, wherein n and m are integers from 1 to 5, and g is an integer from 5 to 25.

**23.** The polymer blend of claim 22, wherein g has an average value from 9 to 20.

**24.** The polymer blend of claim 22, wherein the siloxane polyetherimide copolymer is a random copolymer.

**25.** The polymer blend of claim 22, wherein the siloxane polyetherimide copolymer is a block copolymer.

**26.** The polymer blend of claim 22 wherein the siloxane polyetherimide copolymer is an alternating copolymer.

**27.** The polymer blend of claim 22, wherein the organosiloxane-containing repeating unit constitutes from 20 to 50 mole % of the siloxane polyetherimide copolymer.

**28.** The polymer blend of claim22 , wherein the organosiloxane-containing repeating unit constitutes from 25 to 40 mole % of the siloxane polyetherimide copolymer.

**29.** The polymer blend of claim 22 which contains from 2% to 75% by wt. of the siloxane polyetherimide copolymer.

**30.** The polymer blend of claim 22 which contains from 5% to 30% by wt. of the siloxane polyetherimide copolymer.

**31.** The polymer blend of claim 30, wherein the polyetherimide consists of repeating units of the formula

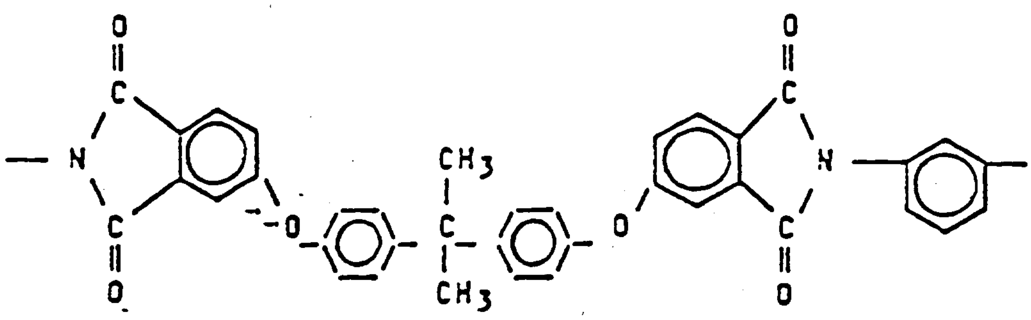

**32.** The use for lowering heat-release and smoke-release characteristics, as determined by the procedures described in Part 25 of Title 14 of the Code of Federal Regulations, of polyetherimide siloxane-polyetherimide copolymer blends, and of a thermoplastic resin selected from the group consisting of polyetheretherketones, polysulfones and polyethersulfones of, based on the total weight of the polymer blend, 0.2 to 20% by weight of a dispersed perfluorocarbon polymer which is a thermoplastic fluorinated polyolefin having a melting point in excess of 120 °C.

## Patentansprüche

**1.** Schmelzverarbeitbare Polymermischung, die ein Polyätherimid und basierend auf der Polymermischung 2 bis 90 Gew.-% eines Siloxanpolyätherimid-Copolymeren und 0,2 bis 20 Gew.-% eines Perfluorkohlenstoff-Polymeren enthält, welches ein thermoplastisches fluoriertes Polyolefin mit einem Schmelzpunkt von über 120 °C ist, worin das Polyätherimid aus wiederkehrenden Einheiten der Formel

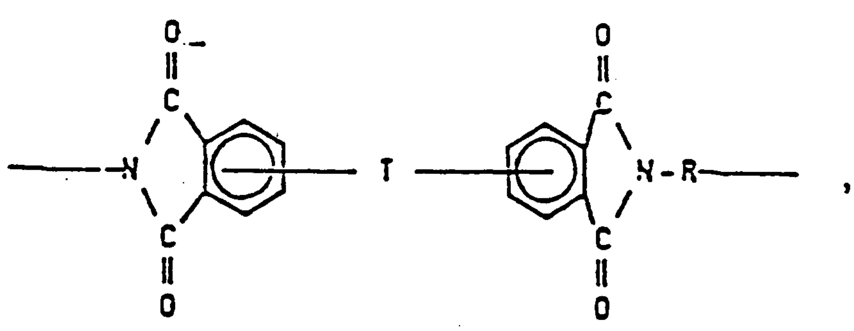

und und fakultativ wiederkehrenden Einheiten der Formel

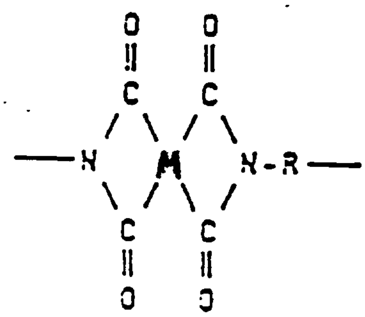

ist, und das Siloxanpolyätherimid-Copolymere aus wiederkehrenden Einheiten der Formel

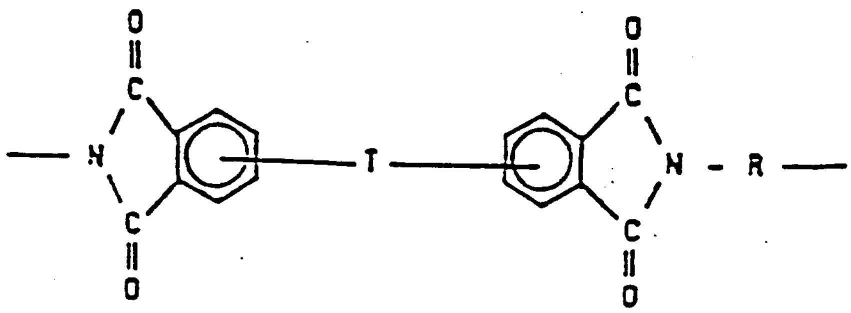

und wiederkehrenden Einheiten der Formel

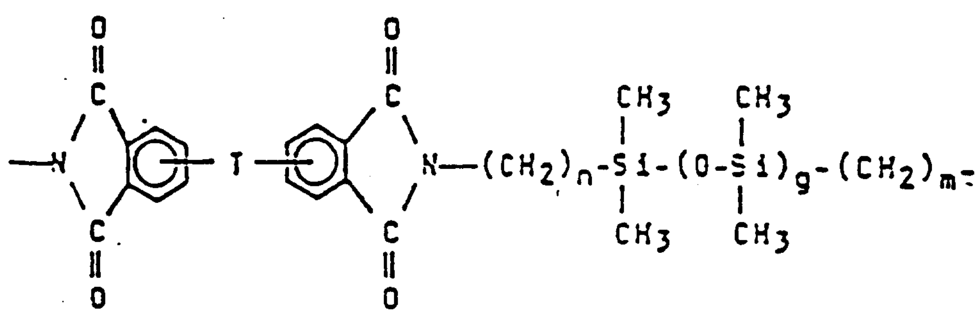

besteht, worin T -O- oder eine Gruppe der Formel

-O-Z-O-

ist, worin die zweiwertigen Bindungen der -O- oder der -O-Z-O- Gruppe in den 3,3', 3,4', 4,3' oder 4,4'-Positionen sind; Z ein Glied ist aus der Klasse, bestehend aus (A)

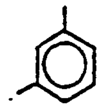 , 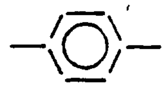 , 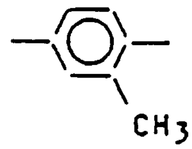 ,

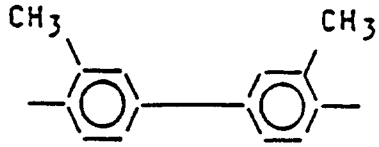 , 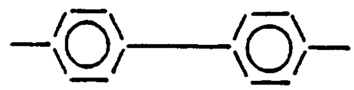

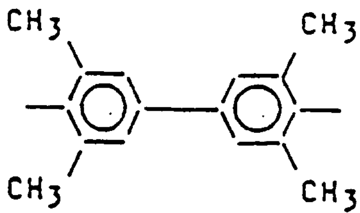 und 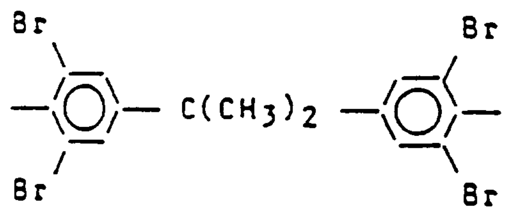

und (B) zweiwertigen organischen Resten der allgemeinen Formel

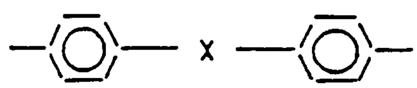

worin X ein Glied ist, ausgewählt aus der Gruppe bestehend aus zweiwertigen Resten der Formeln

$-C_yH_{2y}-$,

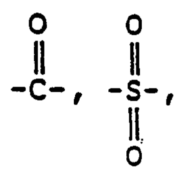

-O- und -S-

worin y eine ganze Zahl von 1 bis 5 ist und R ein zweiwertiger organischer Rest ist, ausgewählt aus der Gruppe, bestehend aus (a) aromatischen Kohlenwasserstoffresten mit 6 bis 20 Kohlenstoffatomen und halogenierten Derivaten derselben, (b) Alkylenresten mit 2 bis 20 Kohlenstoffatomen, Cycloalkylenresten mit 3 bis 20 Kohlenstoffatomen und (c) zweiwertigen Resten der allgemeinen Formel

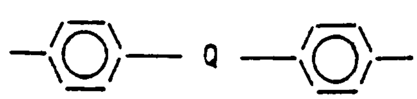

worin Q ein Glied ist, ausgewählt aus der Gruppe, bestehend aus

-S-, -O-,

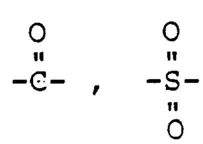

und $-C_xH_{2x}-$,
x eine ganze Zahl von 1 bis 5 ist, n und m unabhängig ganze Zahlen von 1 bis 10 sind und g eine ganze Zahl von 5 bis 40 ist und M ausgewählt ist aus der Gruppe, bestehend aus

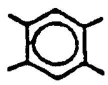 , 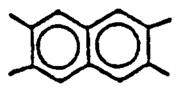 und 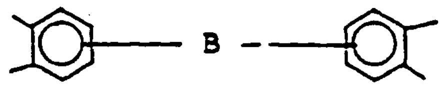

worin B -S- oder

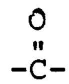

ist.

2. Polymermischung nach Anspruch 1, worin das Perfluorkohlenstoff-Polymer ausgewählt ist aus der Gruppe, bestehend aus Polytetrafluorethylen, fluoriertem Ethylenpropylen-Copolymer, Perfluoralkoxyharz, Polychlortrifluorethylen und Polybromtrifluorethylen.

3. Polymermischung nach Anspruch 1, worin das Perfluorkohlenstoff-Polymere ein Molekulargewicht von weniger als 500000 aufweist.

4. Polymermischung nach Anspruch 2, worin das Perfluorkohlenstoff-Polymere Polytetrafluorethylen ist und ein Molekulargewicht von weniger als 100000 aufweist.

5. Polymermischung nach Anspruch 3, die 0,5 Gew.-% bis 5 Gew.-% des Polytetrafluorethylens enthält.

6. Polymermischung nach Anspruch 1, worin n und m ganze Zahlen von 1 bis 5 sind und g eine ganze Zahl von 5 bis 25 ist.

7. Polymermischung nach Anspruch 6, worin g einen Mittelwert von 9 bis 20 aufweist.

8. Polymermischung nach Anspruch 6, worin das Siloxanpolyätherimid-Copolymere ein im wesentlichen willkürliches Copolymer ist.

9. Polymermischung nach Anspruch 6, worin das Siloxanpolyätherimid-Copolymere ein Blockcopolymer ist.

10. Polymermischung nach Anspruch 6, worin das Siloxanpolyätherimid-Copolymer ein abwechselndes Copolymer ist.

11. Polymermischung nach Anspruch 1, worin die wiederkehrende Organosiloxan-haltige Einheit aus 20 bis 50 Mol-% des Siloxanpolyätherimid-Copolymeren besteht.

12. Polymermischung nach Anspruch 1, worin die Organosiloxan-haltige wiederkehrende Einheit aus 25 bis 40 Mol-% des Siloxanpolyätherimid-Copolymeren besteht.

13. Polymermischung nach Anspruch 1, welche 2 bis 75 Gew.% des Siloxanpolyätherimid-Copolymeren enthält.

14. Polymermischung nach Anspruch 6, welche 5 bis 30 Gew.-% des Siloxanpolyätherimid-Copolymeren enthält.

15. Polymermischung nach Anspruch 14, worin das Polyätherimid aus wiederkehrenden Einheiten der Formel

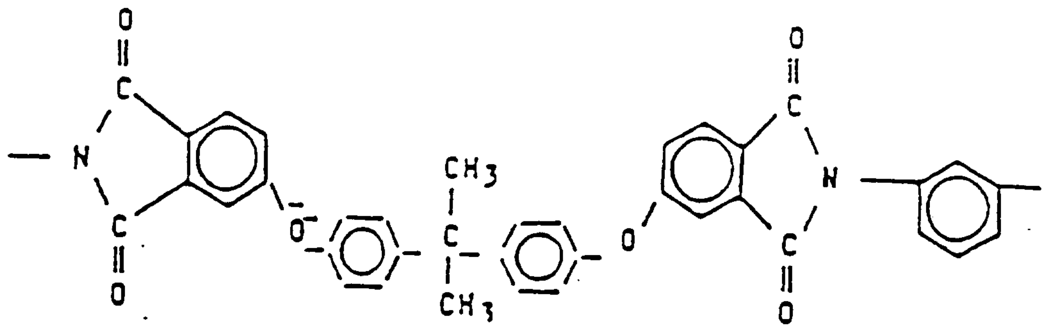

besteht.

**16.** Polymermischung nach Anspruch 1, welche 0,5 bis 30 Gew.-% fein verteiltes Titandioxid, bezogen auf das Gesamtgewicht der Polymermischung, enthält.

**17.** Polymermischung nach Anspruch 1, welche 2 bis 20 Gew.-% fein verteiltes Titandioxid, bezogen auf das GEsamtgewicht der Polymermischung, enthält.

**18.** Polymermischung nach Anspruch 17, worin das Titandioxid eine durchschnittliche Teilchengröße von weniger als 5 Mikrometer aufweist.

**19.** Schmelzverarbeitbare Polymermischung, die ein Polyätherimid und, bezogen auf das Gesamtgewicht der Polymermischung, 2 bis 90 Gew.-% eines Siloxanpolyätherimid-Copolymeren und 0,5 bis 30 Gew.-% fein verteilten Titandioxid enthält, worin das Polyätherimid aus wiederkehrenden Einheiten der Formel

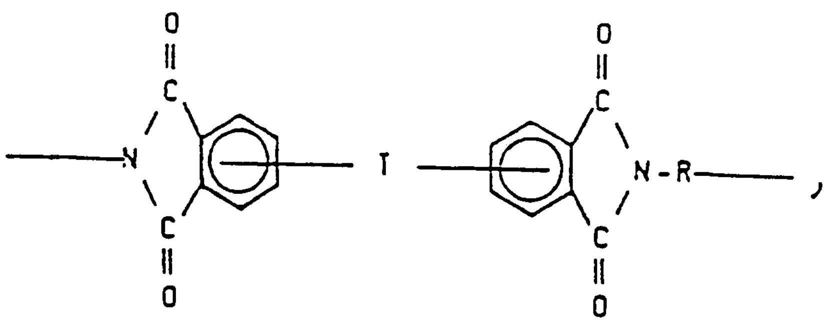

besteht und fakultativ wiederkehrende Einheiten der Formel

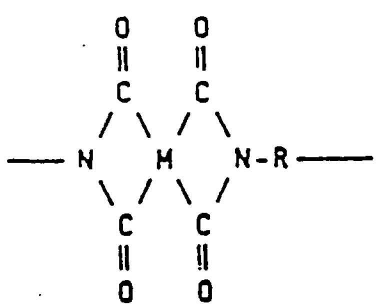

aufweist und das Siloxanpolyätherimid-Copolymere im wesentlichen aus wiederkehrenden Einheiten der Formel

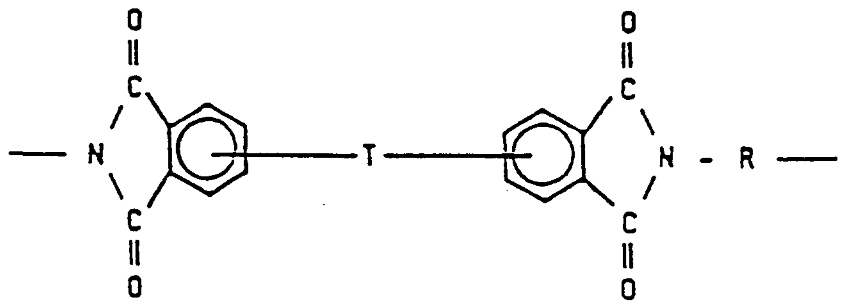

und wiederkehrenden Einheiten der Formel

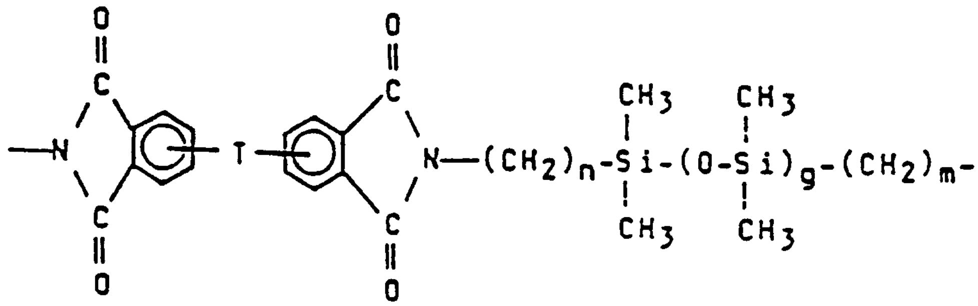

besteht worin T -O- oder eine Gruppe der Formel

-O-Z-O-

ist, worin die zweiwertigen Bindungen der -O- oder der -O-Z-O- Gruppe in den 3,3', 3,4', 4,3' oder 4,4' Stellungen angeordnet sind, Z ein Glied ist aus der Klasse, bestehend aus (A)

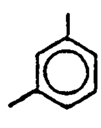 , 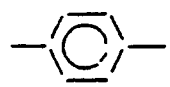 , 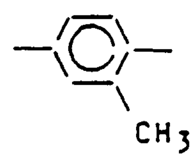 ,

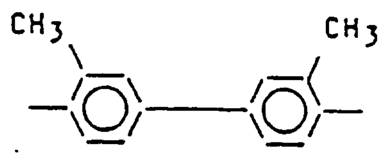 , 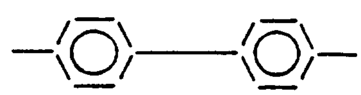

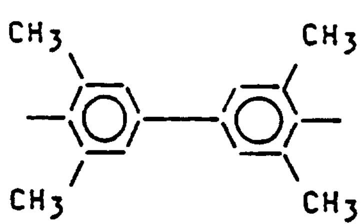 und 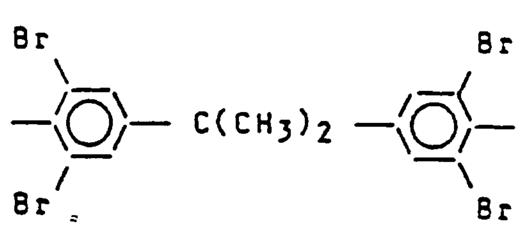

und (B) zweiwertigen organischen Resten der allgemeinen Formel

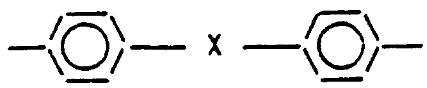

worin X ein Glied ist, ausgewählt aus der Gruppe bestehend aus zweiwertigen Resten der Formeln
$-C_yH_{2y}-$,

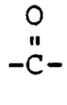 , 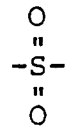 ,

-O- und -S-
worin y eine ganze Zahl von 1 bis 5 ist und R ein zweiwertiger organischer Rest ist, ausgewählt aus der Gruppe bestehend aus (a) aromatischen Kohlenwasserstoffresten mit 6 bis 20 Kohlenstoffatomen und halogenierten Derivaten derselben, (b) Alkylenresten mit 2 bis 20 Kohlenstoffatomen, Cycloalkylenresten mit 3 bis 20 Kohlenstoffatomen und (c) zweiwertigen Resten der allgemeinen Formel

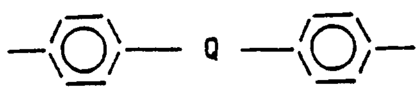

worin Q ein Glied ist, ausgewählt aus der Gruppe bestehend aus
-S-, -O-,

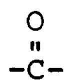 , 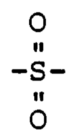

und $-C_xH_{2x}-$,
worin x eine ganze Zahl von 1 bis 5, n und m unabhängig ganze Zahlen von 1 bis 10 und g eine ganze Zahl von 5 bis 40 sind und M ausgewählt ist aus der Gruppe, bestehend aus

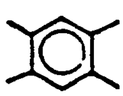 , 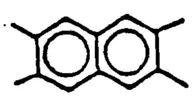 und 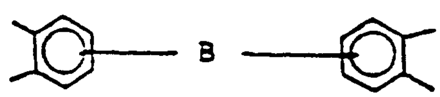

worin B -S- oder

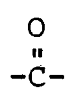

ist.

**20.** Polymermischung nach Anspruch 19, die 2 bis 20 Gew.-% Titandioxid enthält.

**21.** Polymermischung nach Anspruch 20, worin das Titandioxid eine durchschnittliche Teilchengröße von weniger als 5 Mikrometer aufweist.

22. Polymermischung nach Anspruch 19, worin n und m ganze Zahlen von 1 bis 5 und g eine ganze Zahl von 5 bis 25 sind.

23. Polymermischung nach Anspruch 22, worin g einen durchschnittlichen Wert von 9 bis 20 aufweist.

24. Polymermischung nach Anspruch 22, worin das Siloxanpolyätherimid-Copolymere ein willkürliches Copolymer ist.

25. Polymermischung nach Anspruch 22, worin das Siloxanpolyätherimid-Copolymer ein Blockcopolymer ist.

26. Polymermischung nach Anspruch 22, worin das Siloxanpolyätherimid-Copolymer ein abwechselndes Copolymer ist.

27. Polymermischung nach Anspruch 22, worin die Organosiloxan-haltige wiederkehrende Einheit 20 bis 50 Mol-% des Siloxanpolyätherimid-Copolymeren umfaßt.

28. Polymermischung nach Anspruch 22, worin die Organosiloxan-haltige wiederkehrende Einheit 25 bis 40 Mol-% des Siloxanpolyätherimid-Copolymeren umfaßt.

29. Polymermischung nach Anspruch 22, die 2 bis 75 Gew.-% des Siloxanpolyätherimid-Copolymeren enthält.

30. Polymermischung nach Anspruch 22, die 5 bis 30 Gew.-% des Siloxanpolyätherimid-Copolymeren enthält.

31. Polymermischung nach Anspruch 30, worin das Polyätherimid aus wiederkehrenden Einheiten der Formel

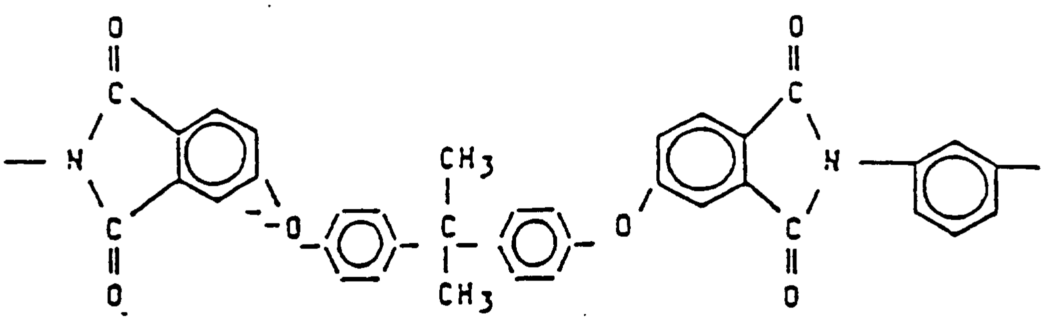

besteht.

32. Verwendung zur Senkung der Wärmefreigabe und der Rauchfreigabe-Eigenschaften, bestimmt gemäß den Verfahren, wie sie in Teil 25 des Titels 14 der Code of Federal Regulations, beschrieben sind, von Polyätherimid-Siloxan-Polyätherimid-Copolymer-Mischungen und von einem thermoplastischen Harz, ausgewählt aus der Gruppe, bestehend aus Polyätherätherketonen, Polysulfonen und Polyäthersulfonen von, basierend auf dem Gesamtgewicht der Polymermischung, 0,2 bis 20 Gew.-% eines dispergierten Perfluorkohlenstoff-Polymeren, welches ein thermoplastisches fluoriertes Polyolefin mit einem Schmelzpunkt von über 120 °C ist.

**Revendications**

1. Mélange de polymères traités à l'état fondu comportant un poly(éther imide) et, par rapport au mélange de polymères, 2 à 90% en poids d'un copolymère siloxane-poly(éther imide) et 0,2 à 20% en poids d'un polymère perfluorocarboné qui est une polyoléfine fluorée thermoplastique ayant un point de fusion de plus de 120 °C, mélange dans lequel le poly(éther imide) consiste en des motifs répétés de formule :

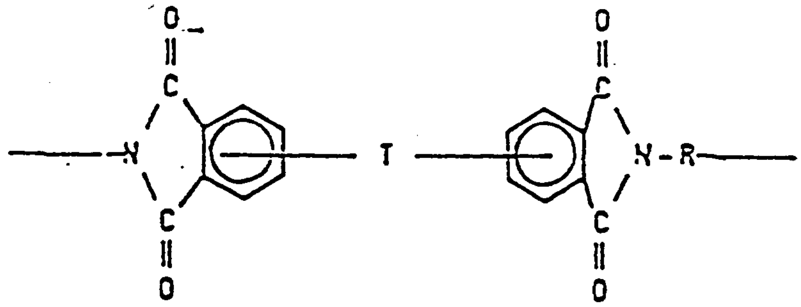

et, éventuellement de motifs répétés de formule :

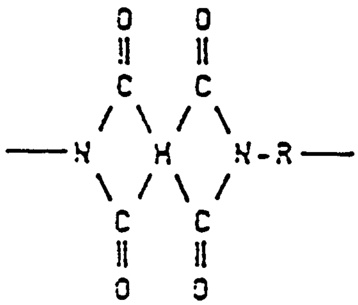

et le copolymère siloxane-poly(éther imide) consiste en des motifs répétés de formule :

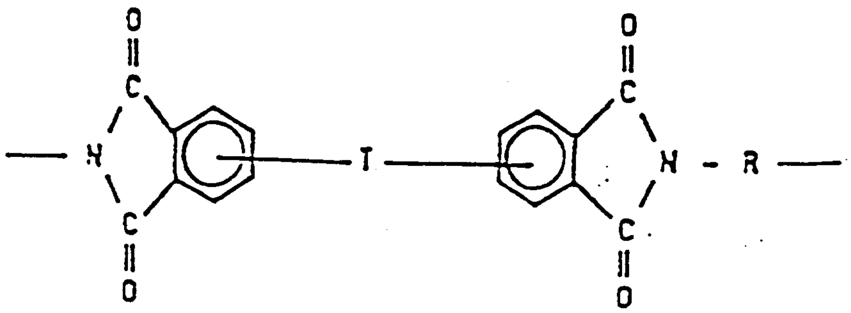

et de motifs répétés de formule:

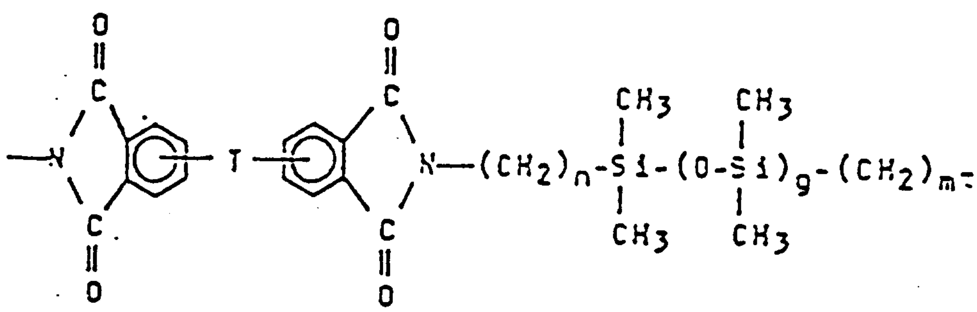

où T est -O- ou un groupe de formule -O-Z-O-dans lesquelles les liaisons divalentes de -O- ou du groupe -O-Z-O- sont dans les positions 3,3', 3,4', 4,3' ou 4,4'; Z est un membre de la classe consistant en (A) :

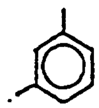 , 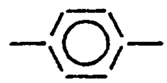 , 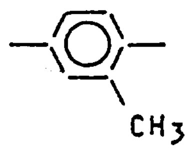 ,

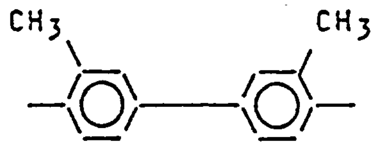 , 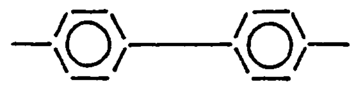

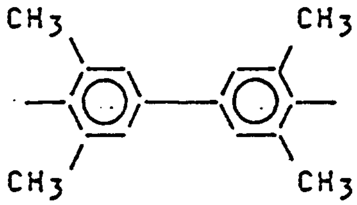 et 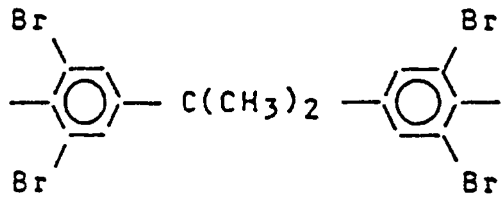

et en (B) des radicaux organiques divalents de formule générale :

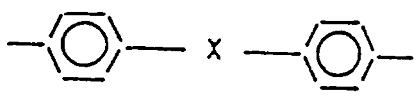

dans laquelle X est choisi dans le groupe constitué par les radicaux divalents de formules :

$-C_yH_{2y}-$,

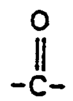 , 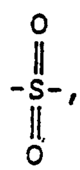 ,

-O- et -S-

où y est un entier allant de 1 à 5 ; et R est un radical organique divalent choisi dans le groupe constitué par (a) les radicaux hydrocarbonés aromatiques ayant de 6 à 20 atomes de carbone et leurs dérivés halogénés, (b) les radicaux alkylène ayant de 2 à 20 atomes de carbone, les radicaux cycloalkylène ayant de 3 à 20 atomes de carbone, et (c) les radicaux divalents de formule générale :

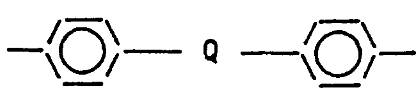

dans laquelle Q est choisi dans le groupe constitué par

-S-, -O-,

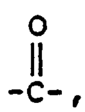 , 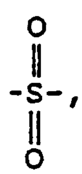 ,

et $-C_xH_{2x-}$,
où x est un entier de 1 à 5, n et m, indépendamment l'un de l'autre, sont des entiers allant de 1 à 10 et g est un entier allant de 5 à 40, et M est choisi dans le groupe constitué par

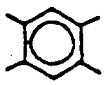 , 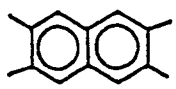 et 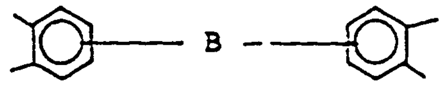

dans laquelle B est -S- ou

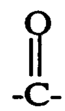 .

2. Mélange de polymères selon la revendication 1, dans lequel le polymère perfluorocarboné est choisi dans le groupe constitué par du polytétrafluoroéthylène, un copolymère fluoré de propylène et d'éthylène, une résine perfluoroalcoxy, du polychlorotrifluoroéthylène et du polybromotrifluoroéthylène.

3. Mélange de polymères selon la revendication 1, dans lequel le polymère perfluorocarboné a un poids moléculaire inférieur à 500.000.

4. Mélange de polymères selon la revendication 2, dans lequel le polymère perfluorocarboné est du polytétrafluoroéthylène et a un poids moléculaire inférieur à 100.000.

5. Mélange de polymères selon la revendication 3, caractérisé en ce qu'il contient de 0,5 à 5% en poids de polytétrafluoroéthylène.

6. Mélange de polymères selon la revendication 1, caractérisé en ce que n et m sont des entiers allant de 1 à 5, et g est un entier allant de 5 à 25.

7. Mélange de polymères selon la revendication 6, caractérisé en ce que g a une valeur moyenne allant de 9 à 20.

8. Mélange de polymères selon la revendication 6, caractérisé en ce que le copolymère siloxane-poly-(éther imide) est un copolymère pratiquement statistique.

9. Mélange de polymères selon la revendication 6, caractérisé en ce que le copolymère siloxane-poly-(éther imide) est un copolymère séquencé.

10. Mélange de polymères selon la revendication 6, caractérisé en ce que le copolymère siloxane-poly-(éther imide) est un copolymère alterné.

11. Mélange de polymères selon la revendication 1, caractérisé en ce que le motif répété contenant un organosiloxane constitue de 20 à 50% en moles du copolymère siloxane-poly(éther imide).

12. Mélange de polymères selon la revendication 1, caractérisé en ce que le motif répété contenant l'organosiloxane constitue de 25 à 40% en moles du copolymère siloxane-poly(éther imide).

13. Mélange de polymères selon la revendication 1, caractérisé en ce qu'il contient de 2 à 75% en poids du copolymère siloxane-poly(éther imide).

14. Mélange de polymères selon la revendication 6, caractérisé en ce qu'il contient de 5 à 30% en poids du copolymère siloxane-poly(éther imide).

15. Mélange de polymères selon la revendication 14, caractérisé en ce que le poly(éther imide) est constitué de motifs répétés de formule :

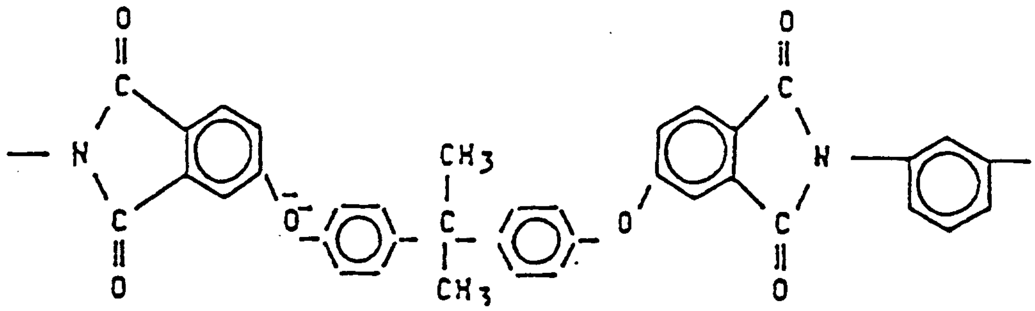

16. Mélange de polymères selon la revendication 1, caractérisé en ce qu'il contient de 0,5 à 30% en poids par rapport au poids total du mélange de polymères, de dioxyde de titane finement divisé.

17. Mélange de polymères selon la revendication 1, caractérisé en ce qu'il contient de 2 à 20% en poids, par rapport au poids total du mélange de polymères, de dioxyde de titane finement divisé.

18. Mélange de polymères selon la revendication 17, caractérisé en ce que la taille moyenne des particules de dioxyde de titane est inférieure à 5 micromètres.

19. Mélange de polymères traités à l'état fondu comportant un poly(éther imide), et, par rapport au poids total du mélange de polymères, 2 à 90% en poids d'un copolymère siloxane-poly(éther imide) et 0,5 à 30% en poids de dioxyde de titane finement divisé, caractérisé en ce que le poly(éther imide) consiste en des motifs répétés de formule :

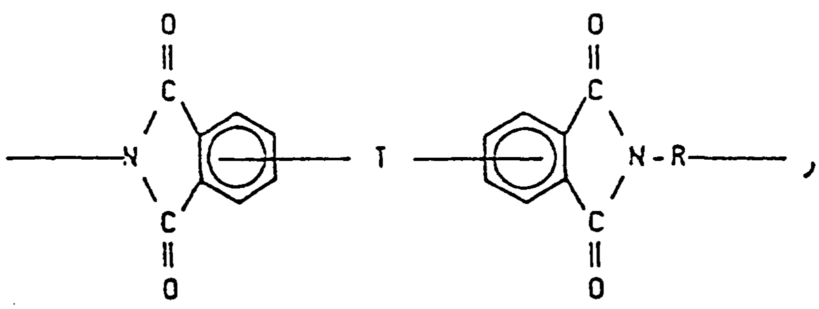

et, éventuellement des motifs répétés de formule :

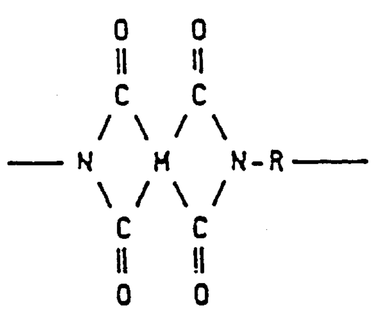

et le copolymère siloxane-poly(éther imide) consiste essentiellement en des motifs répétés de formule :

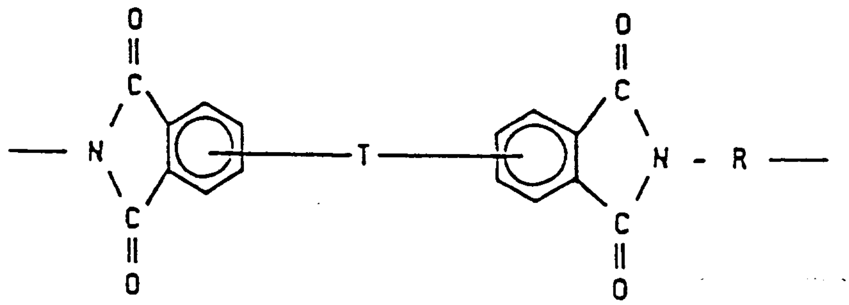

et des motifs répétés de formule :

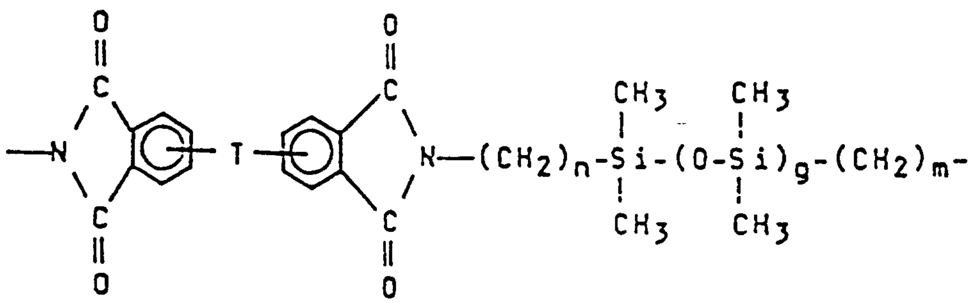

où T est -O- ou un groupe de formule -O-Z-O- dans lesquelles les liaisons divalentes de -O- ou du groupe -O-Z-O- sont dans les positions 3,3', 3,4', 4,3' ou 4,4'; Z est un membre de la classe consistant en (A) :

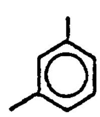 , 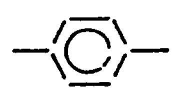 , 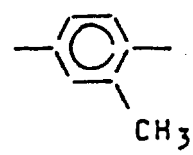 ,

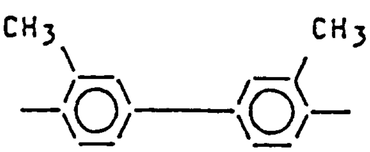 , 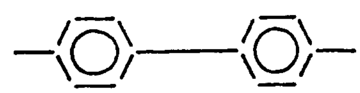

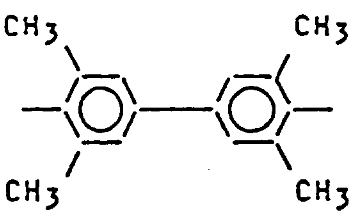 et 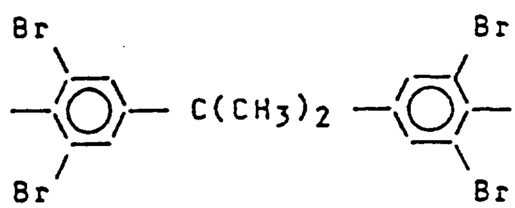

et en (B) des radicaux organiques divalents de formule générale :

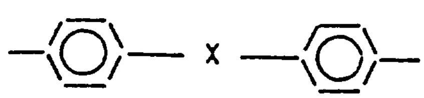

dans laquelle X est choisi dans le groupe constitué par les radicaux divalents de formules :

$-C_yH_{2y}-$,

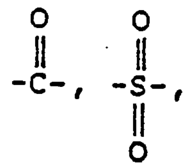

-O- et -S-

où y est un entier allant de 1 à 5 ; et R est un radical organique divalent choisi dans le groupe constitué par (a) les radicaux hydrocarbonés aromatiques ayant de 6 à 20 atomes de carbone et leurs dérivés halogénés, (b) les radicaux alkylène ayant de 2 à 20 atomes de carbone, les radicaux cycloalkylène ayant de 3 à 20 atomes de carbone, et (c) les radicaux divalents de formule générale :

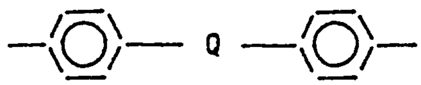

dans laquelle Q est choisi dans le groupe constitué par

-S-, -O-,

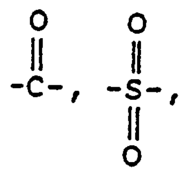

et $-C_xH_{2x-}$,

où x est un entier allant de 1 à 5, n et m, indépendamment l'un de l'autre, sont des entiers allant de 1 à 10 et g est un entier allant de 5 à 40, et M est choisi dans le groupe constitué par

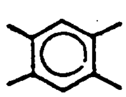 , 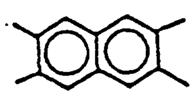 et 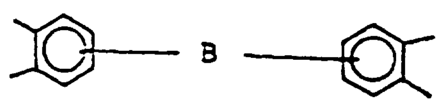

dans laquelle B est -S- ou

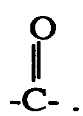

**20.** Mélange de polymères selon la revendication 19, caractérisé en ce qu'il contient de 2 à 20% en poids de dioxyde de titane.

**21.** Mélange de polymères selon la revendication 20, caractérisé en ce que la taille moyenne de particules de dioxyde de titane est inférieure à 5 micromètres.

**22.** Mélange de polymères selon la revendication 19, caractérisé en ce que n et m sont des entiers allant de 1 à 5, et g est un entier allant de 5 à 25.

**23.** Mélange de polymères selon la revendication 22, caractérisé en ce que g a une valeur moyenne allant de 9 à 20.

**24.** Mélange de polymères selon la revendication 22, dans laquelle le copolymère siloxane-poly(éther imide) est un copolymère statistique.

**25.** Mélange de polymères selon la revendication 22, caractérisé en ce que le copolymère siloxane-poly-(éther imide) est un copolymère séquencé.

**26.** Mélange de polymères selon la revendication 22, caractérisé en ce que le copolymère siloxane-poly-(éther imide) est un copolymère alterné.

**27.** Mélange de polymères selon la revendication 22, caractérisé en ce que le motif répété contenant l'organosiloxane, constitue de 20 à 50% en moles du copolymère siloxane-poly(éther imide).

**28.** Mélange de polymères selon la revendication 22, caractérisé en ce que le motif répétitif contenant l'organosiloxane constitue de 25 à 40% en moles du copolymère siloxane-poly(éther imide).

**29.** Mélange de polymères selon la revendication 22, caractérisé en ce qu'il contient de 2 à 75% en poids de copolymère siloxane-poly(éther imide).

**30.** Mélange de polymères selon la revendication 22, caractérisé en ce qu'il contient de 5 à 30% en poids de copolymère siloxane-poly(éther imide).

**31.** Mélange de polymères selon la revendication 20, caractérisé en ce que le poly(éther imide) est constitué de motifs répétés de formule :

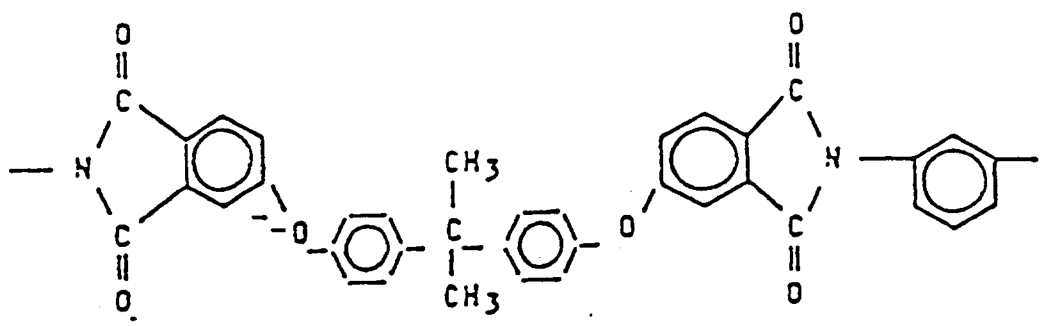

**32.** Utilisation, pour abaisser les caractéristiques de dégagement de chaleur et de dégagement de fumée de mélanges de copolymères poly(éther imide)/ siloxane-poly(éther imide) et d'une résine thermoplastique choisie dans le groupe constitué par des poly(éther éther cétone), des polysulfones et des poly-(éther sulfone), lesdites caractéristiques étant déterminées conformément aux procédures décrites à la partie 25 du titre 14 du Code of Federal Regulations, de 0,2 à 20% en poids par rapport au poids total du mélange polymère d'un polymère perfluorocarboné dispersé qui est une polyoléfine fluorée thermoplastique ayant un point de fusion supérieur à 120 °C.